(19) Europäisches Patentamt
European Patent Office
Office européen des brevets

(11) **EP 3 753 984 B1**

(12) **EUROPEAN PATENT SPECIFICATION**

(45) Date of publication and mention
of the grant of the patent:
**24.08.2022 Bulletin 2022/34**

(51) International Patent Classification (IPC):
*C08G 65/336* (2006.01)  *C09D 171/02* (2006.01)
*C09J 171/02* (2006.01)  *C09D 183/04* (2006.01)

(21) Application number: **19753707.9**

(22) Date of filing: **13.02.2019**

(52) Cooperative Patent Classification (CPC):
**C08G 65/336; C09D 171/02; C09J 171/02**

(86) International application number:
**PCT/JP2019/005118**

(87) International publication number:
**WO 2019/159972 (22.08.2019 Gazette 2019/34)**

(54) **SINGLE-COMPONENT CURABLE COMPOSITION FOR WORKING JOINT**

HÄRTBARE EINKOMPONENTEN-ZUSAMMENSETZUNG FÜR EINE ARBEITSFUGE

COMPOSITION DURCISSABLE À COMPOSANT UNIQUE POUR JOINT DE TRAVAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2018  JP 2018022932**

(43) Date of publication of application:
**23.12.2020  Bulletin 2020/52**

(73) Proprietor: **Kaneka Corporation**
**Osaka-shi, Osaka 530-8288 (JP)**

(72) Inventors:
• **YUKIMOTO, Sadao**
**Takasago-shi, Hyogo 676-8688 (JP)**
• **YAMASHITA, Kohei**
**Takasago-shi, Hyogo 676-8688 (JP)**
• **SAITO, Takahiro**
**Takasago-shi, Hyogo 676-8688 (JP)**

(74) Representative: **Vossius & Partner**
**Patentanwälte Rechtsanwälte mbB**
**Siebertstrasse 3**
**81675 München (DE)**

(56) References cited:
WO-A1-2011/152002    WO-A1-2015/080067
WO-A1-2017/188185    JP-A- 2003 041 115
JP-A- 2014 088 481    JP-A- 2014 198 791
JP-A- 2015 025 049    JP-A- 2015 508 419
JP-A- 2016 098 302    US-A1- 2009 306 283

**Description**

Technical Field

The present invention relates to a one-component curable composition for a working joint which contains a polyoxyalkylene-based polymer having a reactive silicon group (particularly a trialkoxysilyl group).

Background Art

It is known that it is possible to obtain an elastomeric cured product from a polyoxyalkylene-based polymer having a reactive silicon group (also referred to as "modified silicone"), by carrying out crosslinking by the formation of a siloxane bond which occurs along with e.g. a hydrolysis reaction of the reactive silicon group caused by e.g. humidity, even at room temperature. A polyoxyalkylene-based polymer having a reactive silicon group is currently industrially produced and is used widely as a raw material resin for use in e.g. sealants, adhesive agents, and coating materials.

The properties of a cured product of a polyoxyalkylene-based polymer having a reactive silicon group can be improved by the addition of various compounds such as a reactive plasticizer and a silane compound (Patent Literatures 1 and 2).

Curable compositions that include a polyoxyalkylene-based polymer having a reactive silicon group are used widely as sealants for joints in the fields of construction and civil engineering. Depending on the method of curing, a sealant may be a one-component sealant, which is cured using moisture in the air, or a two-component sealant, which is cured by mixing a main agent with a curing agent.

Out of these, the one-component sealant is excellent in workability because there is no need to mix a main agent with a curing agent, and there can be no curing failure caused by batching mistakes.

Buildings have (a) joints where there is a large amount of expansion and contraction of external members due to changes in the amount of sunlight and changes in temperature such as atmospheric temperature, and (b) joints where there is a large amount of displacement or movement of external members due to the effects of e.g. various vibrations and wind pressure. These joints are called working joints. Typically, two-component sealants are used for these working joints. The reason for this is presumably that with two-component sealants, curing progresses throughout the entirety of the curable composition, and thus even if there is large displacement at the joint during the curing, no damage occurs to the surface or inside of the cured product. That is, reason is presumably that two-component sealants have excellent ability to conform to displacement during curing.

In contrast, in one-component sealants, curing progresses from a surface which comes into contact with moisture in the air. Because of this, if there is a large displacement during curing, a stress differential will occur between cured portions at the surface and non-cured internal portions. This presumably can lead to damage such as cracking in the cured product. In other words, one-component sealants presumably have poor ability to conform to displacement during curing. For this reason, heretofore, one-component sealants have not been used for working joints where large displacement occurs.

To date, there have been various studies regarding one-component and two-component curable compositions containing a polyoxyalkylene-based polymer having a reactive silicon group, which compositions can be used for working joints (Patent Literatures 3 to 12).

One-component curable adhesive/sealant compositions comprising (A) a polyoxyalkylene-based polymer having reactive silicone groups, (D) a silane compound and (E) an organotin compound are disclosed in US 2009/306283 A1 (Patent Literature 13).

Citation List

[Patent Literature]

[Patent Literature 1]
WO 2005/073322
[Patent Literature 2]
Published Japanese Translation of PCT International Application Tokuhyo No. 2015-508419
[Patent Literature 3]
Japanese Patent Application Publication Tokukai No. 2015-089911
[Patent Literature 4]
WO 2014-175358

[Patent Literature 5]
WO 2004/031299
[Patent Literature 6]
Japanese Patent Application Publication Tokukai No. 2010-001380
[Patent Literature 7]
Japanese Patent Application Publication Tokukai No. 2011-256246
[Patent Literature 8]
Japanese Patent Application Publication Tokukai No. 2005-306891
[Patent Literature 9]
Japanese Patent Application Publication Tokukai No. 2011-153309
[Patent Literature 10]
WO 2013/042702
[Patent Literature 11]
Japanese Patent Application Publication Tokukai No. 2015-010162
[Patent Literature 12]
Japanese Patent Application Publication Tokukai No. 2017-214541
[Patent Literature 13]
US 2009/306283 A1

Summary of Invention

Technical Problem

However, in terms of compression recovery rate, ability to conform to displacement, and durability, the conventional art such as that above is insufficient and has room for further improvement.

An embodiment of the present invention was accomplished in view of the above problem. An object of an embodiment of the present invention is to provide a novel one-component curable composition, containing a polyoxyalkylene-based polymer having a reactive silicon group, which composition is capable of providing a cured product that (i) has an excellent compression recovery rate, excellent ability to conform to displacement, and excellent durability, and (ii) can be used as sealant for a working joint of a building.

Solution to Problem

As a result of diligent research in order to solve the above problem, the inventors of the present invention arrived at the present invention.

A one-component curable composition for a working joint, in accordance with an embodiment of the present invention, includes: (A) a polyoxyalkylene-based polymer having a per-molecule average of 1.2 to 5 reactive silicon groups represented by General Formula (1); (D) a silane compound obtained by partial condensation of an aminosilane compound having a reactive silicon group, or a silane compound obtained by partial condensation of an aminosilane compound having a reactive silicon group with an alkoxysilane compound other than an aminosilane; and (E) a tetravalent organotin compound in an amount of not less than 0.05 parts by weight but less than 1 part by weight with respect to 100 parts by weight of the component (A),

$$-SiX_3 \qquad (1)$$

where each X independently represents a hydroxy group or a hydrolyzable group.

Advantageous Effects of Invention

An embodiment of the present invention makes it possible to provide a one-component curable composition, containing a polyoxyalkylene-based polymer having a reactive silicon group, which composition is capable of providing a cured product that (i) has an excellent compression recovery rate, excellent ability to conform to displacement, and excellent durability, and (ii) can be used as sealant for a working joint of a building.

Description of Embodiments

The following description will discuss an embodiment of the present invention.

The following description will discuss an embodiment of the present invention. The present invention is not, however, limited to this embodiment. The present invention is not limited to the configurations described below, but may be altered in various ways within the scope of the claims. The present invention also encompasses, in its technical scope, any embodiment or example derived by combining technical means disclosed in differing embodiments and Examples. Further, it is possible to form a new technical feature by combining the technical means disclosed in the respective embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

1. Technical Idea of an Embodiment of the Present Invention

As a result of diligent research, the inventors of the present invention found that the techniques disclosed by the above prior art Literatures 3 to 12 have room for improvement in terms of ability to conform to displacement and durability. In other words, a sealant that (i) has a sufficient ability to conform to displacement and sufficient durability and (ii) is applicable to working joints where large displacement occurs had not been discovered.

As a result of diligent research in order to solve the above problem, the inventors of the present invention succeeded in preparing a one-component curable composition for a working joint which, surprisingly, despite being a one-component curable composition, (i) passes for durability classification 9030 as set forth in JIS A5758, (ii) has an excellent compression recovery rate and an excellent ability to conform to displacement, and (iii) can be used as a sealant for a working joint of a building. Specifically, the one-component curable composition includes: a polyoxyalkylene-based polymer having a per-molecule average of 1.2 to 5 reactive silicon groups represented by the above General Formula (1); a silane compound obtained by partial condensation of an aminosilane compound having a reactive silicon group, or a silane compound obtained by partial condensation of an aminosilane compound having a reactive silicon group with an alkoxysilane compound other than an aminosilane; and a tetravalent organotin compound in an amount of not less than 0.05 parts by weight but less than 1 part by weight with respect to 100 parts by weight of the polyoxyalkylene-based polymer.

2. Curable Composition

A curable composition in accordance with an embodiment of the present invention includes: (A) a polyoxyalkylene-based polymer having a per-molecule average of 1.2 to 5 reactive silicon groups represented by General Formula (1); (D) a silane compound obtained by partial condensation of an aminosilane compound having a reactive silicon group, or a silane compound obtained by partial condensation of an aminosilane compound having a reactive silicon group with an alkoxysilane compound other than an aminosilane; and (E) a tetravalent organotin compound in an amount of not less than 0.05 parts by weight but less than 1 part by weight with respect to 100 parts by weight of the component (A),

$$-SiX_3 \qquad (1)$$

where each X independently represents a hydroxy group or a hydrolyzable group.

The curable composition in accordance with an embodiment of the present invention is a one-component curable composition for a working joint.

Herein, a curable composition in accordance with an embodiment of the present invention may also be referred to simply as "the present curable composition". Herein, "(A) a polyoxyalkylene-based polymer having a per-molecule average of 1.2 to 5 reactive silicon groups represented by General Formula (1)" may also be referred to simply as a "component (A)". Herein, "(D) a silane compound obtained by partial condensation of an aminosilane compound having a reactive silicon group, or a silane compound obtained by partial condensation of an aminosilane compound having a reactive silicon group with an alkoxysilane compound other than an aminosilane" may also be referred to simply as a "component (D)". Herein, "(E) a tetravalent organotin compound" may also be referred to simply as a "component (E)".

By being composed as above, the present curable composition advantageously makes it possible, even when used as a one-component sealant, to provide a cured product that (i) passes for durability classification 9030 as set forth in JIS A5758, and (ii) has an excellent compression recovery rate and an excellent ability to conform to displacement. As such, the present curable composition is suitable for use as a sealant for a working joint of a building.

2-1. Component (A)

In an embodiment of the present invention, the reactive silicon groups of the component (A) are represented by the following General Formula (1):

$$-SiX_3 \qquad (1)$$

where each X independently represents a hydroxy group or a hydrolyzable group.

The hydrolyzable group is not particularly limited, and can be a conventionally known hydrolyzable group. Examples of the hydrolyzable group encompass a hydrogen atom, a halogen atom, an alkoxy group, an acyloxy group, a ketoxymate group, an amino group, an amide group, an aminooxy group, a mercapto group, and an alkenyloxy group. Out of these hydrolyzable groups, the hydrogen atom, the alkoxy group, the acyloxy group, the ketoxymate group, the amino group, the amide group, the aminooxy group, the mercapto group, and the alkenyloxy group are preferable. As the hydrolyzable group, the alkoxy group is more preferable in that it has mild hydrolyzability and is easy to handle. Out of alkoxy groups, a methoxy group, an ethoxy group, and an isopropoxy group are even more preferable as the hydrolyzable group. The methoxy group is most preferable as the hydrolyzable group.

Three hydrolyzable groups (X) which bond to a silicon atom may each be the same or different.

The reactive silicon groups represented by General Formula (1) are not particularly limited. The reactive silicon groups represented by General Formula (1) are preferably trialkoxysilyl groups because a trialkoxysilyl group is highly active and makes it possible to obtain favorable curability. Specifically, a trimethoxysilyl group, a triethoxysilyl group, and a triisopropoxysilyl group are more preferable as the trialkoxysilyl group, and a trimethoxysilyl group is most preferable as the trialkoxysilyl group.

The following description will discuss a case where a trialkoxysilyl group is used as the reactive silicon groups represented by General Formula (1) ("Case A"), and a case where an alkyldialkoxysilyl group is used as a reactive silicon group outside the scope of General Formula (1) ("Case B"). In comparison to Case B, in Case A, curing progresses quickly to the inside of the curable composition containing the component (A) even when the curable composition is used as a one-component composition. In other words, in comparison to a reactive silicon group such as an alkyldialkoxysilyl group that is outside the scope of General Formula (1), a reactive silicon group represented by General Formula (1), such as a trialkoxysilyl group, contributes more to the improvement of recoverability, durability, and creep resistance.

The per-molecule average number of reactive silicon groups in the component (A) is preferably 1.2 to 5, more preferably 1.2 to 4, and even more preferably 1.2 to 3. If the per-molecule average number of reactive silicon groups in the component (A) is less than 1.2, the resulting curable composition will have insufficient curability. Such a curable composition would therefore provide a cured product that does not have favorable rubber elasticity, and that would be unlikely to exhibit recoverability, durability, and creep resistance. The reactive silicon groups may exist at a main chain terminal or a side chain terminal of the component (A), or may exist at both a main chain terminal and side chain terminal. In particular, it is preferable that a reactive silicon group exist only at a main chain terminal of the component (A), because in such a case, the effective network length in the ultimately formed cured product becomes longer, and it is easier to obtain an elastomeric cured product which has high strength, high elongation, and a low elastic modulus.

A known method can be used to introduce the reactive silicon groups into the polyoxyalkylene-based polymer. For example, the following Methods I to III can be used.

Method I: React (i) an organic polymer having a functional group such as a hydroxy group with (ii) a compound having (a) an active group that is reactive with the functional group and (b) a unsaturated group, so as to obtain an organic polymer having an unsaturated group. Next, react (i) the resulting organic polymer having the unsaturated group with (ii) a hydrosilane compound having a reactive silicon group by hydrosilylation.

Examples of the compound used in Method I which has (a) an active group that is reactive and (b) an unsaturated group encompass unsaturated-group-containing epoxy compounds such as allyl chloride, methallyl chloride, and allyl glycidyl ether.

Examples of the hydrosilane compound for use in Method I encompass, but are not limited to, halogenated silanes, alkoxysilanes, acyloxysilanes, and ketoxymatesilanes.

Examples of the halogenated silanes encompass trichlorosilane, methyldichlorosilane, dimethylchlorosilane, and phenyldichlorosilane.

Examples of the alkoxysilanes encompass trimethoxysilane, triethoxysilane, triisopropoxysilane, 1-[2-(trimethoxysilyl)ethyl]-1,1,3,3-tetramethyldisiloxane, diethoxymethylsilane, dimethoxymethylsilane, and phenyldimethoxysilane.

Examples of the acyloxysilanes encompass methyldiacetoxysilane and phenyldiacetoxysilane.

Examples of the ketoxymatesilanes encompass bis(dimethylketoxymate)methylsilane and bis(cyclohexylketoxymate)methylsilane.

When obtaining the component (A) having the reactive silicon group of General Formula (1), out of these hydrosilane compounds, in terms of the hydrolyzability and mildness of reaction, trialkoxysilanes are preferable, and the trimethoxysilane and the triethoxysilane are more preferable.

In order to obtain the component (A) having the trimethoxysilyl group, it is preferable to use the methods disclosed in WO 2007-040143 and Japanese Patent Application Publication Tokukai No. 2008-285585, involving (i) using triethoxysilane as a raw material to synthesize a polymer having a triethoxysilyl group, and (ii) thereafter, using methanol to convert the triethoxysilyl group into a trimethoxysilyl group. This is because trimethoxysilane is a very unstable compound and can cause a disproportional reaction, which may result in the generation of monosilane having a low boiling point and spontaneous combustibility. Furthermore, trimethoxysilane has poor handleability because it is extremely hazardous to the human body, particularly to the eyes, and is also difficult to acquire.

Method II: Examples of the Method II encompass a method in which a radical addition reaction in the presence of a radical initiator and/or a radical generation source is used to introduce a compound having a mercapto group and a reactive silicon group into an unsaturated group site of an organic polymer having an unsaturated group, the organic polymer being obtained as in Method I.

Examples of the compound having a mercapto group and a reactive silicon group for use in Method II encompass, but are not limited to, $\gamma$-mercaptopropyltrimethoxysilane, $\gamma$-mercaptopropyl triethoxysilane, mercaptomethyltrimethoxysilane, and mercaptomethyltriethoxysilane.

Method III: An organic polymer having in its molecule a functional group such as a hydroxy group, an epoxy group, or an isocyanate group is reacted with a compound having a reactive silicon group and a functional group that is reactive with the functional group of the organic polymer.

The method disclosed in Japanese Patent Application Publication, Tokukaihei, No. 3-47825 may be used as one example of the Method III, specifically, as a method in which (i) an organic polymer having a hydroxy group is reacted with (ii) a compound having a reactive silicon group and an isocyanate group that is reactive with the hydroxy group, but this example is non-limiting.

Examples of the compound having an isocyanate group and a reactive silicon group for use in Method III encompass, but are not limited to, $\gamma$-isocyanatepropyltrimethoxysilane, $\gamma$-isocyanatepropyltriethoxysilane, isocyanatemethyltrimethoxysilane, and isocyanatemethyltriethoxysilane.

If the $\gamma$-mercaptopropyltrimethoxysilane or the $\gamma$-isocyanatepropyltrimethoxysilane is used, a disproportional reaction will not proceed, unlike a case where trimethoxysilane is used. As such, rather than using trimethoxysilane in Method I, it is more preferable to use Method II or Method III.

A disproportional reaction will not proceed with a silane compound represented by the following General Formula (3):

$$H-(SiR^2_2O)_mSiR^2_2-R^3-SiX_3 \qquad (3)$$

where: X is the same as in General Formula (1); the $2m + 2$ number of $R^2$ each independently represent a hydrocarbon group; $R^3$ represents a bivalent organic group; and m represents an integer of 0 to 19.

As such, in a case where Method I involves introducing a group in which three hydrolyzable groups are bonded to a single silicon atom, it is preferable to use the silane compound represented by General Formula (3). In terms of availability and cost, the $2m + 2$ number of $R^2$ are each independently preferably a hydrocarbon group having 1 to 20 carbon atoms, more preferably a hydrocarbon group having 1 to 8 carbon atoms, and even more preferably a hydrocarbon group having 1 to 4 carbon atoms. $R^3$ is preferably a bivalent hydrocarbon group having 1 to 12 carbon atoms, more preferably a bivalent hydrocarbon group having 2 to 8 carbon atoms, and even more preferably a bivalent hydrocarbon group having 2 carbon atoms. "m" is most preferably 1.

Examples of the silane compound represented by General Formula (3) encompass 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

The Method I or Method III in which an organic polymer having a hydroxy group as a terminal group is reacted with a compound having an isocyanate group and a reactive silicon group is preferable, because with such a method, a high conversion rate is achieved in a comparatively short reaction time. However, in comparison to an organic polymer having a reactive silicon group as obtained in Method III, an organic polymer having a reactive silicon group as obtained in Method I has lower viscosity and makes it possible to obtain a curable composition having good workability. An organic polymer having a reactive silicon group as obtained in Method II has a strong odor due to mercaptosilane. As such, Method I is particularly preferable.

In an embodiment of the present invention, the polyoxyalkylene-based polymer which is a main-chain structure of the component (A) is preferably a polymer having a repeating unit represented by the following General Formula (4):

$$-R^4-O- \qquad (4)$$

where: $R^4$ represents a straight chain or branched alkylene group having 1 to 14 carbon atoms, more preferably a straight chain or branched alkylene group having 2 to 4 carbon atoms.

Examples of the repeating unit represented by General Formula (4) encompass the following: $-CH_2O-$; $-CH_2CH_2O-$; $-CH_2CH(CH_3)O-$; $-CH_2CH(C_2H_5)O-$; $-CH_2C(CH_3)_2O-$; and $-CH_2CH_2CH_2CH_2O-$.

In the component (A), the main chain of the polyoxyalkylene-based polymer may be constituted by one type of repeating unit, or may be constituted by two or more types of repeating units. Particularly in a case where the curable composition in accordance with an embodiment of the present invention is used for e.g. a sealant, it is preferable that the polyoxyalkylene-based polymer, which is a main-chain structure of the component (A), be a polyoxypropylene-based polymer that is amorphous and has a relatively low viscosity.

Examples of the method for synthesizing the polyoxyalkylene-based polymer encompass, but are not limited to, (a) a polymerization method which utilizes an alkali catalyst such as KOH, (b) a polymerization method which utilizes a transition metal compound-porphyrin complex catalyst such as a complex obtained by reacting an organic aluminum compound and porphyrin, which polymerization method is disclosed in Japanese Patent Application Publication, Tokukaisho, No. 61-215623, (c) a polymerization method which utilizes a double metal cyanide complex catalyst (composite metal cyanide complex catalyst) (for example, a zinc hexacyanocobaltate glyme complex catalyst), which polymerization method is disclosed in e.g. Japanese Examined Patent Application Publication, Tokukoushou, No. 46-27250, Japanese Examined Patent Application Publication, Tokukoushou, No. 59-15336, US3278457, US3278458, US3278459, US3427256, US3427334, and US3427335, (d) a polymerization method which utilizes a catalyst made of a polyphosphazene salt as disclosed in Japanese Patent Application Publication, Tokukaihei, No. 10-273512, and (e) a polymerization method which utilizes a catalyst made of a phosphazene compound as disclosed in Japanese Patent Application Publication, Tokukaihei, No. 11-060722. Out of these synthesis methods, it is preferable to use a polymerization method in which alkylene oxide is reacted with an initiator in the presence of double metal cyanide complex catalyst, because such a method makes it possible to obtain a polymer having a narrow molecular weight distribution.

Examples of the double metal cyanide complex catalyst encompass $Zn_3[Co(CN)_6]_2$ (a zinc hexacyanocobaltate complex). It is also possible to use a catalyst in which an alcohol and/or ether is coordinated as an organic ligand in e.g. a zinc hexacyanocobaltate complex.

As the initiator, a compound having at least two active hydrogen groups is preferable (such a compound hereinafter also referred to as an "active-hydrogen-containing compound"). Examples of the active-hydrogen-containing compound encompass polyhydric alcohols such as ethylene glycol, diethylene glycol, propylene glycol and glycerin, and straight chain and/or branched polyether compounds having a number average molecular weight of 500 to 20,000.

Examples of the alkylene oxide encompass ethylene oxide, propylene oxide, and isobutylene oxide.

Examples of the polyoxyalkylene-based polymer having the reactive silicon group represented by General Formula (1) encompass (a) polymers proposed in e.g. Japanese Examined Patent Application Publication, Tokukoushou, No. 45-36319, Japanese Examined Patent Application Publication, Tokukoushou, No. 46-12154, Japanese Patent Application Publication, Tokukaisho, No. 50-156599, Japanese Patent Application Publication, Tokukaisho, No. 54-6096, Japanese Patent Application Publication, Tokukaisho, No. 55-13767, Japanese Patent Application Publication, Tokukaisho, No. 55-13468, Japanese Patent Application Publication, Tokukaisho, No. 57-164123, Japanese Examined Patent Application Publication, Tokukouhei, No. 3-2450, US3632557, US4345053, US4366307, and US4960844, and (b) a polyoxyalkylene-based polymer which has (i) a reactive silicon group, (ii) a high molecular weight with a number average molecular weight of not less than 6,000, and (iii) a narrow molecular weight distribution (Mw/Mn) of not more than 1.6, as disclosed in Japanese Patent Application Publication, Tokukaisho, No. 61-197631, Japanese Patent Application Publication, Tokukaisho, No. 61-215622, Japanese Patent Application Publication, Tokukaisho, No. 61-215623, Japanese Patent Application Publication, Tokukaisho, No. 61-218632, Japanese Patent Application Publication, Tokukaihei, No. 3-72527, Japanese Patent Application Publication, Tokukaihei, No. 3-47825, and Japanese Patent Application Publication, Tokukaihei, No. 8-231707. One type of such a polyoxyalkylene-based polymer having a reactive silicon group may be used alone, or two or more types may be used in combination.

The polyoxyalkylene-based polymer having the reactive silicon group represented by General Formula (1) may be a straight-chain or branched polymer. The number average molecular weight (Mn) of the polyoxyalkylene-based polymer having the reactive silicon group represented by General Formula (1) is measured by gel permeation chromatography (GPC) (polystyrene equivalent). The number average molecular weight is preferably 1,000 to 100,000, more preferably 2,000 to 50,000, and particularly preferably 3,000 to 35,000. If the number average molecular weight is less than 1,000, the cured product tends to have insufficient elongation. If the number average molecular weight is greater than 100,000, there tends to be inconvenience in terms of workability because the curable composition will have a high viscosity. The molecular weight distribution (Mw/Mn) of the polyoxyalkylene-based polymer having the reactive silicon group represented by General Formula (1), as measured by GPC, is preferably not more than 2, more preferably not more than 1.5, and even more preferably not more than 1.4.

The component (A) in accordance with an embodiment of the present invention may contain other component(s) such as a urethane-bond component, to the extent that the other component(s) do not negatively affect the effects in accordance with an embodiment of the present invention. The urethane-bond component is not particularly limited, but possible examples encompass groups produced by a reaction between an isocyanate group and an active hydrogen group (hereinafter, group produced by such a reaction are also referred to as "amide-containing groups").

The amide-containing groups are represented by the following General Formula (5):

$$-NR^5-C(=O)- \qquad (5)$$

where $R^5$ represents an organic group or a hydrogen atom.

Specific examples of the amide-containing groups include groups formed by a reaction between an isocyanate group and a hydroxy group, groups formed by a reaction between an isocyanate group and an amino group, groups formed by a reaction between an isocyanate group and an isocyanate group, and groups formed by a reaction between an isocyanate group and a mercapto group. The amide-containing groups represented by General Formula (5) also include groups formed by a reaction between (i) an amino-binding site which includes an active hydrogen atom in the $R^5$ of General Formula (5) and (ii) an isocyanate group.

Examples of methods for easily industrially producing an organic polymer having a amide-containing group and a reactive silicon group encompass a method involving (i) obtaining a polyurethane-based polymer having an isocyanate group as a terminal group by reacting (a) an organic polymer having an active-hydrogen-containing group as a terminal group and (b) an excess amount of a polyisocyanate compound, and (ii) after or simultaneously with obtaining the polyurethane-based polymer, reacting (a) part or all of the terminal isocyanate groups with the W group of a silicon compound represented by the following General Formula (6).

$$W-R^6-SiR^1_{3-a}X_a \qquad (6)$$

where: $R^1$, X, and "a" are the same as in the General Formula (2) described later; $R^6$ represents a bivalent organic group and is more preferably a hydrocarbon group having 1 to 20 carbon atoms; and W represents an active-hydrogen-containing group selected from among a hydroxy group, a carboxy group, a mercapto group, and an amino group (primary or secondary).

Examples of the silicon compound represented by General Formula (6) encompass amino-group-containing silane compounds, hydroxy-group-containing silane compounds, and mercapto-group-containing silane compounds.

These examples encompass the following silane compounds in a case where the component (A) has a reactive silicon group in which "a" in General Formula (6) is 3.

Examples of the amino-group-containing silane compound encompass γ-aminopropyltrimethoxysilane, N-(β-aminoethyl)-γ-aminopropyltrimethoxysilane, (N-phenyl)-γ-aminopropyltrimethoxysilane, N-ethylaminoisobutyltrimethoxysilane, N-cyclohexylaminomethyltriethoxysilane, and N-phenylaminomethyltrimethoxysilane.

Examples of the hydroxy-group-containing silane compound encompass γ-hydroxypropyltrimethoxysilane.

Examples of the mercapto-group-containing silane compound encompass γ-mercaptopropyltrimethoxysilane.

Furthermore, as the silicon compound represented by General Formula (6), it is possible to use (i) a reactant from a Michael addition reaction between (a) any of various α,β-unsaturated carbonyl compounds and (b) a primary-amino-group-containing silane compound, or (ii) a reactant from a Michael addition reaction between (a) any of various (meth)acryloyl-group-containing silane compounds and (b) a primary-amino-group-containing compound, as disclosed in Japanese Patent Application Publication, Tokukaihei, No. 6-211879 (US5364955), Japanese Patent Application Publication, Tokukaihei, No. 10-53637 (US5756751), Japanese Patent Application Publication, Tokukaihei, No. 10-204144 (EP0831108), Japanese Patent Application Publication, Tokukai, No. 2000-169544, and Japanese Patent Application Publication, Tokukai, No. 2000-169545.

Examples of literature related to this method of production encompass Japanese Examined Patent Application Publication, Tokukoushou, No. 46-12154 (US3632557), Japanese Patent Application Publication, Tokukaisho, No. 58-109529 (US4374237), Japanese Patent Application Publication, Tokukaisho, No. 62-13430 (US4645816), Japanese Patent Application Publication, Tokukaihei, No. 8-53528 (EP0676403), Japanese Patent Application Publication, Tokukaihei, No. 10-204144 (EP0831108), Published Japanese Translation of PCT International Application, Tokuhyo, No. 2003-508561 (US6197912), Japanese Patent Application Publication, Tokukaihei, No. 6-211879 (US5364955), Japanese Patent Application Publication, Tokukaihei, No. 10-53637 (US5756751), Japanese Patent Application Publication, Tokukaihei, No. 11-100427, Japanese Patent Application Publication, Tokukai, No. 2000-169544, Japanese Patent Application Publication, Tokukai, No. 2000-169545, Japanese Patent Application Publication, Tokukai, No. 2002-212415, Japanese Patent No. 3313360, US4067844, US3711445, and Japanese Patent Application Publication, Tokukai, No. 2001-323040.

Examples of a polymer having an amide-containing group and a reactive silicon group encompass a polymer produced by reacting (i) an organic polymer having an active-hydrogen-containing group as a terminal group with (ii) a reactive-silicon-group-containing isocyanate compound represented by General Formula (7) below:

$$O=C=N-R^6-SiR^1_{3-a}X_a \qquad (7)$$

where $R^6$, $R^1$, X, and "a" are the same as in General Formula (6).

Examples of reactive-silicon-group-containing isocyanate compounds represented by General Formula (7) encompass, but are not limited to, γ-trimethoxysilylpropylisocyanate, γ-triethoxysilylpropylisocyanate, γ-methyldimethoxysilylpropylisocyanate, γ-methyldiethoxysilylpropylisocyanate, trimethoxysilylmethylisocyanate, triethoxymethylsilylmethylisocyanate, dimethoxymethylsilylmethylisocyanate, and diethoxymethylsilylmethylisocyanate. It is also possible to use, as the reactive-silicon-group-containing isocyanate compound represented by General Formula (7), a compound obtained by reacting (i) the silicon compound of General Formula (6) with (ii) an excess of amount of the polyisocyanate compound, as disclosed in Japanese Patent Application Publication, Tokukai, No. 2000-119365 (U.S. Patent 6046270).

Examples of literature related to this method of production encompass Japanese Patent Application Publication, Tokukaihei, No. 11-279249 (US5990257), Japanese Patent Application Publication, Tokukai, No. 2000-119365 (US6046270), Japanese Patent Application Publication, Tokukaisho, No. 58-29818 (US4345053), Japanese Patent Application Publication, Tokukaihei, No. 3-47825 (US5068304), Japanese Patent Application Publication, Tokukaihei, No. 11-60724, Japanese Patent Application Publication, Tokukai, No. 2002-155145, Japanese Patent Application Publication, Tokukai, No. 2002-249538, WO03/018658, and WO03/059981.

Examples of an organic polymer having an active-hydrogen-containing group as a terminal group encompass polyoxyalkylene-based polymers (polyether polyols) having a hydroxy group as a terminal group, polyacrylic polyols, polyester polyols, saturated-hydrocarbon-based polymers (polyolefin polyols) having a hydroxy group as a terminal group, polythiol compounds, and polyamine compounds. Out of these, polyether polyols, polyacrylic polyols, and polyolefin polyols are preferable because they allow the resulting organic polymer to have a relatively low glass transition temperature, and allow the resulting cured product to have excellent resistance to cold. In particular, polyether polyols are particularly preferable because (i) they allow a resulting organic polymer to have low viscosity and good workability, (ii) allow the curable composition to have favorable curability in deep portions, and (iii) allow the cured product to have favorable adhesiveness. Polyacrylic polyols and saturated-hydrocarbon-based polymers are more preferable because they allow a resulting cured product to have favorable weather resistance and heat resistance.

The polyether polyols are not particularly limited, but a polyether polyol that has, as an average for all molecules, at least 0.7 hydroxy groups per molecule terminal is preferable. Examples of the polyether polyols encompass (i) a polyoxyalkylene-based polymer produced using a conventional alkali metal catalyst, and (ii) a polyoxyalkylene-based polymer produced by reacting (a) alkylene oxide with (b) an initiator such as a polyhydroxy compound having at least two hydroxy groups, in the presence of a double metal cyanide complex catalyst or a cesium catalyst.

Out of the above polymerization methods, the polymerization method which uses a double metal cyanide complex catalyst is preferable because it makes it possible to obtain a polyoxyalkylene-based polymer that has a lower degree of saturation, a narrow molecular weight distribution (Mw/Mn), lower viscosity, high acid resistance, and high weather resistance.

Examples of the polyacrylic polyol encompass a polyol that (i) has an alkyl (meth)acrylate ester (co)polymer as a main chain and (ii) has a hydroxy group in its molecule. For synthesis of these polymers, a living radical polymerization method is preferable, and an atom transfer radical polymerization method is more preferable, because these methods make it possible to achieve a narrow molecular weight distribution and a lower viscosity. It is also preferable to use a polymer as disclosed in Japanese Patent Application Publication, Tokukai, No. 2001-207157, specifically, a polymer obtained by continuous bulk polymerization of an alkyl-acrylate-ester-based monomer at a high temperature and high pressure.

Examples of the polyisocyanate compound encompass aromatic polyisocyanates and aliphatic polyisocyanates.

Examples of the aromatic polyisocyanates encompass toluene(tolylene) diisocyanate, diphenylmethane diisocyanate, and xylylene diisocyanate.

Examples of the aliphatic polyisocyanates encompass isophorone diisocyanate and hexamethylene diisocyanate.

2-2. Component (B)

The present curable composition preferably further contains (B) a reactive plasticizer that is a polyoxyalkylene-based polymer having a per-molecule average of 0.5 to less than 1.2 reactive silicon groups represented by General Formula (2):

$$-SiR^1_{3-a}X_a \cdots \qquad (2)$$

where: each $R^1$ independently represents an alkyl group having 1 to 20 carbon atoms, an aryl group having 6 to 20 carbon atoms, and an aralkyl group having 7 to 20 carbon atoms; X is the same as in General Formula (1); and "a" represents an integer of 1 to 3.

With the above configuration, a resulting curable composition will have low viscosity and excellent workability. Herein, "(B) a reactive plasticizer that is a polyoxyalkylene-based polymer having a per-molecule average of 0.5 to less than 1.2 reactive silicon groups represented by General Formula (2)" is also referred to simply as a "component (B)".

A curable composition having only the component (A) would provide a cured product having weak mechanical properties. By forming a crosslinked structure with the reactive silicon group in the component (A), the component (B) in accordance with an embodiment of the present invention makes it possible to improve the mechanical properties of such a cured product. Furthermore, the component (B), which has a low molecular weight, functions as a reactive plasticizer or a diluent, thereby lowering the viscosity of the composition and improving the workability of the composition.

As the reactive silicon group in the component (B) in accordance with an embodiment of the present invention, it is possible to use a reactive silicon group represented by the following General Formula (2):

$$-SiR^1{}_{3-a}X_a\cdots \qquad (2)$$

where: each $R^1$ independently represents an alkyl group having 1 to 20 carbon atoms, an aryl group having 6 to 20 carbon atoms, and an aralkyl group having 7 to 20 carbon atoms; X is the same as in General Formula (1); and "a" represents an integer of 1 to 3.

Specific examples of the reactive silicon group in the component (B) encompass, but are not limited to, a trimethoxysilyl group, a triethoxysilyl group, a triisopropoxysilyl group, a dimethoxymethylsilyl group, a diethoxymethylsilyl group, a diethoxyethylsilyl group, a diisopropoxymethylsilyl group, a (chloromethyl)dimethoxysilyl group, a (methoxymethyl)dimethoxysilyl group, and a methoxydimethylsilyl group.

A reactive silicon group in which "a" is 2 in General Formula (2) is more preferable in that it has a large effect of improving the brittleness of a cured product obtained from a curable composition having the component (A) alone, i.e., suitably lowers the modulus of the cured product to achieve favorable elongation, and also makes it easy to achieve storage stability of the curable composition. Specifically, as the reactive silicon group in which "a" is 2 in General Formula (2), e.g. a dimethoxymethylsilyl group, a diethoxymethylsilyl group, a diethoxyethylsilyl group, a diisopropoxymethylsilyl group are preferable, a dimethoxymethylsilyl group and a diethoxymethylsilyl group are more preferable, and a dimethoxymethylsilyl group is particularly preferable.

A reactive silicon group in which "a" is 3 in General Formula (2) is preferable in that it makes it possible to improve the balance between viscosity reduction and mechanical properties while maintaining the fast curability of the component (A). Specifically, as the reactive silicon group in which "a" is 3 in General Formula (2), e.g. a trimethoxysilyl group, a triethoxysilyl group, and a triisopropoxysilyl group are preferable, and a trimethoxysilyl group is particularly preferable because the trimethoxysilyl group has high hydrolysis activity.

In an embodiment of the present invention, as the component (B), a reactive silicon group in which "a" is 2 in General Formula (2) is preferable, and particularly a dimethoxymethylsilyl group is preferable, in that such a group improves the brittleness of the cured product, suitably lowers the modulus of the cured product, achieves favorable elongation, improves durability, and improves a creep property.

In an embodiment of the present invention, it is possible to use the repeating unit represented by General Formula (4) above for the polyoxyalkylene-based polymer which is the main-chain structure of the component (B).

In the component (B), the main chain of the polyoxyalkylene-based polymer may be constituted by one type of repeating unit, or may be constituted by two or more types of repeating units. Particularly in a case where the curable composition in accordance with an embodiment of the present invention is used for e.g. a sealant, it is preferable that the polyoxyalkylene-based polymer, which is a main-chain structure of the component (B), be a polyoxypropylene-based polymer that is amorphous and has a relatively low viscosity.

As a method for introducing the reactive silicon group into the component (B), it is possible to use a method similar to those described above for introducing a reactive silicon group into the component (A) (Method I to Method III). However, the per-molecule average number of reactive silicon groups introduced into the component (B) is preferably 0.5 to less than 1.2, more preferably 0.5 to 1.1, and even more preferably 0.5 to 1.

Specific examples encompass the following: a method where, in Method I, a hydrosilane compound is reacted with a polyoxyalkylene-based polymer having an allyl group at both terminals;

a method where, in Method II, a mercapto silane compound is reacted with a polyoxyalkylene-based polymer having an allyl group at both terminals; and

a method where, in Method III, an isocyanate silane compound is reacted with a polyoxyalkylene-based polymer having a hydroxy group at both terminals.

As with the introduction methods for component (A), Method I is preferable in terms of the removal of residual raw material and in terms of reactivity. Method I is also preferable in that the organic polymer obtained has no structure that presents the risk of reducing heat resistance, such as a urethane bond or urea bond.

Note that, in a case where the reactive silicon group is introduced via the above methods, probabilistically, the following will be produced simultaneously: a substance in which the per-molecule average number of the reactive silicon group is greater than one; a substance in which the per-molecule average number of the reactive silicon group is one; a substance in which the per-molecule average number of the reactive silicon group is zero. A substance in which the per-molecule average number of the reactive silicon group is greater than one has only a small effect of improving the brittleness of the cured product in accordance with an embodiment of the present invention, but may maintain or improve the modulus of a cured product obtained from a curable composition having the component (A) alone. A substance in which the per-molecule average number of the reactive silicon group is one or zero provides plasticity to the cured product in accordance with an embodiment of the present invention, and has an effect of lowering the modulus of a cured product obtained from a curable composition having the component (A) alone. However, a substance in which no reactive silicon groups have been introduced has no reactivity, and in a cured product of a curable composition in accordance with an embodiment of the present invention may potentially cause problems such as coating contamination, due to the effluence of the substance to the surface of the cured product over time.

As such, in the present curable composition, it is preferable that the component (B) contains (B1) a polyoxyalkylene-based polymer in which each molecule has one reactive silicon group represented by General Formula (2). It is more preferable that the main component of the component (B) is the "(B1) polyoxyalkylene-based polymer in which each molecule has one reactive silicon group represented by General Formula (2)". In other words, a preferable component (B) can be obtained by, for example, a method in which, in the Methods I to III for introducing a reactive silyl group, the following are selectively reacted: "(B') a polyoxyalkylene-based precursor polymer having only one functional group into which a reactive silicon group can be introduced"; and one molecule of a compound containing the reactive silicon group represented by General Formula (2).

Herein, the "(B1) polyoxyalkylene-based polymer in which each molecule has one reactive silicon group represented by General Formula (2)" is also referred to simply as a "component (B1)". Specific methods for obtaining the component (B1) encompass a method in which the "(B') polyoxyalkylene-based precursor polymer having only one functional group into which a reactive silicon group can be introduced" is reacted with a hydrosilane compound having a reactive silicon group represented by General Formula (2), the (B') polyoxyalkylene-based precursor polymer being obtained by reacting an alkylene oxide (such as propylene oxide or ethylene oxide) with an initiator having only one hydroxy group per molecule, in the presence of a catalyst (such as a double metal cyanide complex).

In the present curable composition, it is preferable that the component (B) be obtained by introducing the reactive silicon group represented by General Formula (2) into the (B') polyoxyalkylene-based precursor polymer having only one functional group into which a reactive silicon group can be introduced, which polyoxyalkylene-based precursor polymer is obtained by reacting an initiator having only one hydroxy group per molecule with alkylene oxide.

Specific methods for obtaining the component (B1) encompass a method in which a hydrosilane compound having a reactive silicon group represented by General Formula (2) is reacted with "(B") a polyoxyalkylene-based precursor polymer mixture having a functional group into which a reactive silicon group can be introduced, which polyoxyalkylene-based precursor polymer mixture is obtained by reacting an alkylene oxide (such as propylene oxide or ethylene oxide) with a mixture of (i) an initiator having only one hydroxy group per molecule and (ii) an initiator having two or more hydroxy groups per molecule, in the presence of a catalyst (such as a double metal cyanide complex)". When using this method to obtain the component (B1), the resulting reaction product contains the component (B1) in an amount of preferably not less than 50%, more preferably not less than 60%, and even more preferably not less than 70%. If this amount is less than 50 weight%, there tends to be an insufficient improvement in contamination of the surface of the cured product, or there tends to be a high modulus, and thus the resulting reaction product tends to be unsuitable for a construction-use sealant.

In the present curable composition, it is preferable that the component (B) be obtained by introducing the reactive silicon group represented by General Formula (2) into (B") a polyoxyalkylene-based precursor polymer mixture having a functional group into which a reactive silicon group can be introduced, which polyoxyalkylene-based precursor polymer mixture is obtained by reacting an alkylene oxide with a mixture of (i) an initiator having only one hydroxy group per molecule and (ii) an initiator having two or more hydroxy groups per molecule.

Examples of the initiator having only one hydroxy group per molecule encompass, but are not limited to, (a) monohydric primary, secondary, and tertiary alcohols such as methanol, ethanol, propanol, butanol, pentanol, hexanol, heptanol, octanol, nonanol, and decanol, and (b) monohydric unsaturated-group-containing alcohols such as allyl alcohol, methallyl alcohol, and propenyl alcohol. Other examples encompass: a monohydric unsaturated-group-containing alcohol such as (i) monoallyl-etherified products of diol-based compounds as obtained by monoallyl etherification of diol-based compounds such as ethylene glycol, diethylene glycol, propylene glycol, dipropylene glycol, 1,3-propandiol, neopentyl glycol, 1,4-butanediol, 1,5-pentanediol, 1,6-hexanediol, 1,4-cyclohexanediol and (ii) a product of monovinyl etherifying one of the above diol-based compounds; and monohydric saturated alcohol such as a product of monoalkyl etherifying one of the above diol-based compounds.

The following description will discuss a case where the monohydric unsaturated-group-containing alcohol is used, specifically, a case where a polyoxyalkylene-based precursor polymer having an unsaturated group and a hydroxy group at differing respective terminals is used. In such a case, a polyoxyalkylene-based polymer in which one reactive silicon group is introduced into each molecule can be obtained by, for example, (a) reacting isocyanate silane with the hydroxy group, or (b) reacting a hydrosilane compound substantially quantitatively with the unsaturated group. Note that, in a reaction between (i) a hydrosilane compound and (ii) a polyoxyalkylene-based precursor polymer having an unsaturated group and a hydroxy group at differing respective terminals, the hydrosilane compound will be introduced only in a slight amount into the hydroxy group (slight reaction with the hydroxy group), but can react substantially quantitatively with the unsaturated group.

With regard to the type of the initiator, alcohol is preferable because of its excellent reactivity and excellent availability. Particularly, an alcohol having 3 to 7 carbon atoms is most preferable because of its excellent reactivity and excellent availability. An alcohol having 1 or 2 carbon atoms has a low boiling point and is unstable in liquid form, and thus is not suitable as an initiator. In the case of an alcohol having 8 or more carbon atoms, there tends to be low reactivity when a reactive silicon group is introduced into the resulting precursor polymer. Out of alcohols, n-butanol is most preferable.

Examples of the initiator having two or more hydroxy groups per molecule encompass: polyhydric alcohols such as ethylene glycol, diethylene glycol, propylene glycol, and glycerin; and straight chain and/or branched polyether compounds having a number average molecular weight of 500 to 20,000.

Examples of the hydrosilane compound having a reactive silicon group encompass trimethoxysilane, triethoxysilane, dimethoxymethylsilane, and diethoxymethylsilane.

The number average molecular weight of the component (B) is not limited but is preferably 1,000 to 15,000, more preferably 3,000 to 10,000, and particularly preferably 3,000 to not more than 8,000. If the number average molecular weight of the component (B) is less than 1,000, there may be cases where there the component (B) effuses to the surface of the cured product and contaminates a coating surface. If the number average molecular weight of the component (B) is more than 15,000, there may be cases where there is a decrease in the effects of viscosity reduction and workability improvement in the composition. In terms of the effect of viscosity reduction, the number average molecular weight of the component (B) is preferably less than the number average molecular weight of the component (A) by not less than 1,000, and more preferably less than the number average molecular weight of the component (A) by not less than 3,000. The number average molecular weight of the component (B) is a value measured by GPC (polystyrene equivalent).

The used amount of the component (B) is not limited, but, with respect to 100 parts by weight of the component (A), is preferably 15 parts by weight to 200 parts by weight, more preferably 20 parts by weight to 100 parts by weight, and particularly 25 parts by weight to 80 parts by weight. If the used amount of the component (B) is less than 15 parts by weight with respect to 100 parts by weight of the component (A), there may be cases where the effects in accordance with an embodiment of the present invention cannot be obtained.

If the used amount of the component (B) is more than 200 parts by weight with respect to 100 parts by weight of the component (A), there may be cases where the recoverability, durability, and creep resistance of the curable composition are negatively affected.

The component (B) has reactivity with the component (A) and can form a crosslinked structure. As such, when using the component (B) having a low molecular weight, it can be expected that there will be an effect of improving a plasticizer contamination property of the sealant, as compared to a conventional case where a plasticizer is used in large amounts. It can also be expected that there will be an effect of reducing the tackiness of the surface of the cured product, thereby making it less likely that dust and dirt will adhere to the surface. It can also be expected that there will be an effect of improving the workability of the composition, particularly improving stringiness at low temperatures.

In the present curable composition, the polyoxyalkylene-based polymers of the component (A) and the component (B) are preferably polyoxypropylene-based polymers.

2-3. Component (C)

In order to e.g. adjust viscosity and improve workability, it is possible to add, to the curable composition in accordance with an embodiment of the present invention, "(C) a plasticizer which has no reactive silicon group represented by General Formula (1) or General Formula (2)". Herein, the "(C) plasticizer which has no reactive silicon group represented by General Formula (1) or General Formula (2)" is also referred to simply as a "component (C)".

Examples of the component (C) encompass: "(C1 ) a polyether-based plasticizer having no reactive silicon group represented by General Formula (1) or General Formula (2)"; "(C2) a phthalate-ester-based plasticizer"; and a polymeric plasticizer. Herein, the "(C1) polyether-based plasticizer having no reactive silicon group represented by General Formula (1) or General Formula (2)" is also referred to simply as a "component (C1)". Herein, the "(C2) phthalate-ester-based plasticizer" is also referred to simply as a "component (C2)".

Examples of the component (C1) encompass (a) polyether polyols such as polyethylene glycol, polypropylene glycol, and polytetramethylene glycol, and (b) a derivative obtained by converting a hydroxy group of one of these polyether polyols into e.g. an ester group or an ether group. Using one of these examples of the component (C1) is preferable because doing so improves the curability at the surface and in deep portions of the resulting curable composition and reduces or prevents curing retardation after the curable composition has been stored. Out of these examples of the component (C1), polypropylene glycol is particularly preferable.

Example of the component (C2) encompass dimethyl phthalate, diethyl phthalate, dibutyl phthalate, diisobutyl phthalate, di-n-hexyl phthalate, bis(2-ethylhexyl) phthalate, di-n-octyl phthalate, diisononyl phthalate, dinonyl phthalate, diisodecyl phthalate, diisoundecyl phthalate, and bisbutylbenzyl phthalate.

Examples of the polymeric plasticizer encompass (a) vinyl-based polymers obtained by polymerizing vinyl-based monomers by various methods; (b) esters of polyalkylene glycols, such as diethylene glycol dibenzoate, triethylene glycol dibenzoate, and pentaerythritol esters; (c) polyester-based plasticizers obtained from dibasic acids such as sebacic acid, adipic acid, azelaic acid, and phthalic acid, and dihydric alcohols such as ethylene glycol, diethylene glycol, triethylene glycol, propylene glycol, and dipropylene glycol; (d) polystyrenes such as polystyrene and poly-a-methylstyrene; and (e) polybutadiene, polybutene, polyisobutylene, butadiene-acrylonitrile, and polychloroprene.

Out of polymeric plasticizers, a plasticizer that is compatible with the polymer of component (A) and the polymer of component (B) is preferable, and a vinyl-based polymer is preferable in terms of weather resistance and heat resistance. Among the vinyl-based polymers, acrylic polymers and/or methacrylic polymers are more preferable, and acrylic polymers such as a poly(alkyl acrylate ester) are particularly preferable. For synthesis of these polymers, a living radical polymerization method is preferable, and an atom transfer radical polymerization method is more preferable, because these methods make it possible to achieve a narrow molecular weight distribution and a lower viscosity. It is also preferable to use a polymer as disclosed in Japanese Patent Application Publication, Tokukai, No. 2001-207157, which is obtained via a so-called SGO process involving continuous bulk polymerization of an alkyl-acrylate-ester-based monomer at a high temperature and high pressure. This polymer (plasticizer) obtained via an SGO process is sold by Toagosei Co., Ltd. under the product name "ARUFON".

The present curable composition preferably further contains the (C1) polyether-based plasticizer having no reactive silicon group represented by General Formula (1) or General Formula (2). The following description will discuss a case where the component (C1) or a polymeric plasticizer is used ("Case C"). In the Case C, it is possible to maintain initial properties over a longer period of time, as compared to a case where a low molecular weight plasticizer which contains no polymer component in its molecule is used. Furthermore, in the Case C, it is possible to improve a drying property (also called a "coating property") observed in a case where a cured product of the curable composition in accordance with an embodiment of the present invention has been coated with an alkyd coating material.

The number average molecular weight of the component (C1) or the polymeric plasticizer is preferably 500 to 15,000, more preferably 800 to 10,000, even more preferably 1,000 to 8,000, particularly preferably 1,000 to 5,000, and most preferably 1,000 to 3,000. If the number average molecular weight of the component (C1) or the polymeric plasticizer is too low (for example, less than 500), e.g. heat or rainfall causes effluence of the plasticizer over time, the initial properties cannot be maintained in the long term, and it is impossible to improve the alkyd coating property. Furthermore, if the number average molecular weight of the component (C1) or the polymeric plasticizer is too high (for example, greater than 15,000), there will be an increase in viscosity and a deterioration in workability. The molecular weight distribution of the component (C1) or the polymeric plasticizer is not particularly limited, but is preferably less than 1.8, more preferably not more than 1.6, even more preferably not more than 1.5, particularly preferably not more than 1.4, and most preferably not more than 1.3.

A used amount of the component (C1) or the polymeric plasticizer, with respect to a combined total of 100 parts by weight of the component (A) and the component (B), is preferably 0 parts by weight to 200 parts by weight, more preferably 30 parts by weight to 170 parts by weight, and particularly preferably 50 parts by weight to 150 parts by weight.

In the case of a vinyl-based polymer, the number average molecular weight of the component (C) is measured by GPC (polystyrene equivalent). In the case of a polyether-based polymer, the number average molecular weight of the component (C) is measured by terminal group analysis. In addition, the molecular weight distribution (Mw/Mn) is measured by GPC (polystyrene equivalent).

Examples of the component (C) other than those above encompass: (a) non-aromatic dibasic acid esters such as dioctyl adipate, dioctyl sebacate, dibutyl sebacate, diisodecyl succinate; (b) aliphatic esters such as butyl oleate and methyl acetylricinoleate; (c) phosphate esters such as tricresyl phosphate and tributyl phosphate; (d) trimellitic acid esters; (e) chlorinated paraffins; (f) hydrocarbon-based oils such as alkyl diphenyls and partially hydrogenated terphenyls; (g) process oils; (h) epoxy plasticizers such as epoxidized soybean oil and benzyl epoxystearate; and (i) cyclohexane dicarboxylates obtained by hydrogenation of the above phthalate esters.

The used amount of the above examples of comparatively low molecular weight plasticizers is preferably small, because such plasticizers may contaminate a base material around where the curable composition has been applied. In particular, contamination tends to occur easily in porous stone material. For example, granite, marble, and siding board are prone to seepage of the plasticizer and may suffer a deterioration in appearance. In order to reduce or prevent such a deterioration in appearance, the used amount of low molecular weight plasticizers such as the "(C2) phthalate-ester-based plasticizer", with respect to a combined total of 100 parts by weight of the component (A) and the component (B), is preferably not more than 200 parts by weight, more preferably not more than 100 parts by weight, and even more preferably not more than 50 parts by weight. In cases where it is desirable to obtain a curable composition with no contamination properties, it is most preferable to completely omit the use of low molecular weight plasticizers.

If a coating material is to be applied onto the curable composition, it is preferable to use the (C2) phthalate-ester-based plasticizer to an extent that does not worsen the contamination property. This is because using the (C2) phthalate-ester-based plasticizer makes it possible to improve the adhesiveness, with a coating, exhibited by the cured product obtained from the curable composition, and to ameliorate the problem of peeling. Specifically, a used amount of the (C2) phthalate-ester-based plasticizer, with respect to a combined total of 100 parts by weight of the component (A) and the component (B), is preferably 1 part by weight to 30 parts by weight, more preferably 2 parts by weight to 25 parts by weight, and particularly preferably 3 parts by weight to 20 parts by weight.

These examples of the component (C) can be added during production of the curable composition, or can be added during production of the polymer.

When the present curable composition is to be used for a working joint, the used amount of the component (C), with respect to a combined total of 100 parts by weight of the component (A) and the component (B), is preferably 10 parts by weight to 200 parts by weight, more preferably 30 parts by weight to 170 parts by weight, and particularly preferably 50 parts by weight to 150 parts by weight. If the used amount of the component (C) is within the above ranges, the used amount of the component (C2), with respect to a combined total of 100 parts by weight of the component (A) and the component (B), is preferably 10 parts by weight to 200 parts by weight, more preferably 10 parts by weight to 170 parts by weight, and particularly preferably 15 parts by weight to 150 parts by weight.

One type of component (C) may be used alone, or two or more types may be used in combination. The component (C1) and/or the polymeric plasticizer may be used in combination with the component (C2). In a case where two or more types are used in combination, a combination of the component (C1) and the component (C2) is particularly preferable. In such a case, in terms of curability and reducing or preventing migration of the plasticizer to the surface, it is preferable to add more of the component (C1) and/or the polymeric plasticizer than the component (C2).

2-4. Component (D)

A component (D) in accordance with an embodiment of the present invention brings about the effect of improving the recoverability of the curable composition.

The component (D) can be said to be (D) a silane compound obtained by partial condensation of reactive silicon groups of an aminosilane either alone or with another alkoxysilane compound.

The component (D) may be a silane compound that contains one of the following: "(D1) a silane compound obtained by partial condensation of an aminosilane compound having a reactive silicon group" (hereinafter also referred to as a "component (D1)); or "(D2) a silane compound obtained by partial condensation of an aminosilane compound having a reactive silicon group with an alkoxysilane compound other than an aminosilane" (hereinafter also referred to as a "component (D2)"). In the component (D1), one type of aminosilane compound having a reactive silicon group may be used, or two or more types may be used in combination. The component (D1) is preferably obtained by partial condensation of reactive silicon groups of aminosilane compound(s) having reactive silicon groups. In the component (D2), one type of aminosilane compound having a reactive silicon group may be used, or two or more types may be used in combination. In the component (D2), one type of alkoxysilane compound may be used, or two or more types may be used in combination. The component (D2) is preferably obtained by partial condensation of (i) reactive silicon groups of aminosilane compound(s) having reactive silicon groups with (ii) alkoxy groups of alkoxysilane compound(s).

The component (D) is preferably (i) a silane compound obtained by partial condensation of an aminosilane compound having a reactive silicon group represented by General Formula (2), or (ii) a silane compound obtained by partial condensation of an aminosilane compound having a reactive silicon group represented by General Formula (2) with an alkoxysilane compound other than an aminosilane.

Examples of aminosilane compounds having a reactive silicon group encompass N-2-aminoethyl-3-aminopropyltrimethoxysilane, N-2-aminoethyl-3-aminopropyltriethoxysilane, N-2-aminoethyl-3-aminopropylmethyldimethoxysilane, 3-aminopropyltrimethoxysilane, 3-aminopropyltriethoxysilane, 3-aminopropylmethyldimethoxysilane, 3-aminopropylmethyldiethoxysilane, N-phenyl-3-aminopropyltrimethoxysilane, N-phenyl-1-aminomethyltriethoxysilane, and N-n-butyl-3-aminopropyltrimethoxysilane. As the aminosilane compound having a reactive silicon group, one of these examples may be used alone, or two or more of these examples may be used in combination.

Examples of the alkoxysilane compound encompass: (a) hydrocarbon-group-containing silanes such as methyltrimethoxysilane, methyltriethoxysilane, dimethyldimethoxysilane, dimethyldiethoxysilane, ethyltriethoxysilane, n-propyltrimethoxysilane, n-propyltriethoxysilane, hexyltrimethoxysilane, hexyltriethoxysilane, octyltriethoxysilane, decyltrimethoxysilane, phenyltrimethoxysilane, phenyltriethoxysilane, and methyltriacetoxysilane; (b) silicate compounds such as tetramethyl orthosilicate (tetramethoxysilane or methyl silicate), tetraethyl orthosilicate (tetraethoxysilane or ethyl silicate), tetrapropyl orthosilicate, and tetrabutyl orthosilicate; (c) epoxy-group-containing silanes such as 3-glycidoxypropyltrimethoxysilane, 3-glycidoxypropyltriethoxysilane, 3-glycidoxypropylme thyldimethoxysilane, 2-(3,4-epoxycyclohexyl)ethyltrimethoxysilane, and 2-(3,4-epoxycyclohexyl) ethyltriethoxysilane; (d) vinylically-unsaturated-group-containing silanes such as vinyltrimethoxysilane, vinyltriethoxysilane, 3-methacryloyloxypropyltrimethoxysilane, 3-methacryloyloxypropylmethyldimethoxysilane, 3-acryloyloxypropyltrimethoxysilane, and methacryloyloxymethyltrimethoxysilane; (e) mercapto-group-containing silanes such as 3-mercaptopropyltrimethoxysilane, 3-mercaptopropyltriethoxysilane, 3-mercaptopropylmethyldimethoxysilane, 3-mercaptopropylmethyldiethoxysilane, mercaptomethyltrimethoxysilane, and mercaptomethyltriethoxysilane; (f) isocyanurate silanes such as 1,3,5-tris(3-trimethoxysilylpropyl)isocyanurate; and (g) partially hydrolyzed condensates of these examples. As the alkoxysilane compound, one of these examples may be used alone, or two or more of these examples may be used in combination.

Specific examples of the component (D) encompass X-40-2651 (manufactured by Shin-Etsu Chemical Co., Ltd.), MS3301 (manufactured by JNC Corporation), MS3302 (manufactured by JNC Corporation), and DYNASYLAN 1146 (manufactured by Evonik).

The used amount of the component (D) with respect to a combined total of 100 parts by weight of the component (A) and the component (B) is preferably 0.1 parts by weight to 10 parts by weight, more preferably 0.2 parts by weight to 5 parts by weight, and even more preferably 0.5 parts by weight to 4 parts by weight. If the used amount of the component (D) with respect to a combined total of 100 parts by weight of the component (A) and the component (B) is less than 0.1 parts by weight, the recoverability tends to be insufficient. If the used amount with respect to a combined total of 100 parts by weight of the component (A) and the component (B) is greater than 10 parts by weight, there tends to be a decrease in curability.

2-5. Component (E)

A component (E) in accordance with an embodiment of the present invention is used as a curing catalyst (silanol condensation catalyst) for the component (A). Using a tetravalent tin compound makes it possible to easily obtain a one-component curable composition having an excellent curing rate and excellent storage stability.

Specific examples of the component (E) encompass, but are not limited to, tetravalent organotin compounds such as dimethyltin diacetate, dimethyltin bis(acetylacetonate), dibutyltin dilaurate, dibutyltin maleate, dibutyltin phthalate, dibutyltin dioctanoate, dibutyltin bis(2-ethyl hexanoate), dibutyltin bis(methyl maleate), dibutyltin bis(ethyl maleate), dibutyltin bis(butyl maleate), dibutyltin bis(octyl maleate), dibutyltin bis(tridecyl maleate), dibutyltin bis(benzyl maleate), dibutyltin diacetate, dioctyltin bis(ethyl maleate), dioctyltin bis(octyl maleate), dibutyltin dimethoxide, dibutyltin bis(nonylphenoxide), dibutyltin oxide, dibutyltin bis(acetylacetonate) (also referred to as "dibutyltin diacetyl acetonate"), dibutyltin bis(ethyl acetoacetonate), a reaction product of dibutyltin oxide and a silicate compound, a reaction product of dibutyltin oxide and a phthalate ester, dioctyltin dilaurate, dioctyltin diacetate, dioctyltin bis(acetylacetonate), and a reaction product of dioctyltin oxide and a silicate compound.

Out of these tetravalent organotin compounds, dibutyltin-based compounds or dioctyltin-based compounds are preferable because they have e.g. excellent availability, curability, and adhesiveness. Dioctyltin-based compounds are more preferable because they have low toxicity. Out of dioctyltin-based compounds, in terms of workability, dioctyltin dicarboxylate is even more preferable, and dioctyltin dilaurate is particularly preferable.

The used amount of the component (E) with respect to a combined total of 100 parts by weight of the component (A) and the component (B) is preferably not less than 0.05 parts by weight but less than 1 part by weight, more preferably 0.1 parts by weight to 0.7 parts by weight, and even more preferably 0.1 parts by weight to 0.5 parts by weight. If the used amount of the component (E) is less than 0.05 parts by weight with respect to a combined total of 100 parts by weight of the component (A) and the component (B), the component (E) may not function sufficiently as a catalyst, and there is the risk of the component (E) affecting the curing rate due to a batching error. If the used amount of the component (E) is greater than or equal to 1 part by weight with respect to a combined total of 100 parts by weight of the component (A) and the component (B), the resulting curable composition will exhibit faster surface curing, and if there is a large displacement during curing, strain will occur between the surface and internal portions of the curable composition, which may cause cracks in the cured product.

2-6. Various Additives

The curable composition in accordance with an embodiment of the present invention may contain various additives other than those described above, in order to adjust various properties of the curable composition or the cured product. Examples of the various additives encompass fillers, adhesiveness imparting agents, solvents, diluents, anti-sagging agents, antioxidants, light stabilizers, ultraviolet absorbers, physical property adjusting agents, tackifier resins, compounds containing an epoxy group, photocurable substances, oxygen curable substances, epoxy resins, surface property improving agents, expanding agents, curability adjusting agents, flame retardants, silicates, radical inhibitors, metal deactivators, antiozonants, phosphorus-based peroxide decomposition agents, lubricants, pigments, expanding agents, ant repellents, and antifungal agents.

A filler can be added to the curable composition in accordance with an embodiment of the present invention. Examples of the filler encompass reinforcing fillers such as fumed silica, precipitated silica, crystalline silica, fused silica, dolomite, silicic anhydride, hydrous silicic acid, and carbon black; fillers such as ground calcium carbonate, colloidal calcium carbonate, magnesium carbonate, diatomite, calcined clay, clay, talc, titanium oxide, bentonite, organobentonite, ferric oxide, fine aluminum powder, flint powder, zinc oxide, active zinc oxide, shirasu balloons, glass microballoons, organic microballoons of phenol resin and vinylidene chloride resin, and resin powders such as PVC powder and PMMA powder; and fibrous fillers such as glass fiber and filaments.

If a filler is used, the used amount of the filler with respect to a combined total of 100 parts by weight of the component (A) and the component (B) is preferably 1 part by weight to 250 parts by weight, and more preferably 10 parts by weight to 200 parts by weight.

In a case where one of these fillers is used in order to obtain a high-strength cured product, the it is preferable to mainly use a filler selected from, for example, fumed silica, precipitated silica, crystalline silica, fused silica, dolomite, silicic anhydride, hydrous silicic acid, carbon black, surface-treated fine calcium carbonate, calcined clay, clay, and active zinc oxide. A preferable result can be achieved by using such fillers in amount of 1 part by weight to 200 parts by weight with respect to a combined total of 100 parts by weight of the component (A) and the component (B).

In a case where it is preferable to obtain a cured product with low strength and high elongation at break, it is preferable to mainly use a filler selected from, for example, titanium oxide, calcium carbonate such as ground calcium carbonate, magnesium carbonate, talc, ferric oxide, zinc oxide, and shirasu balloons. A preferable result can be achieved by using such fillers in an amount of 5 parts by weight to 200 parts by weight with respect to a combined total of 100 parts by weight of the component (A) and the component (B).

Note that, with regard to calcium carbonate, in general a greater specific surface area of the calcium carbonate correlates to a greater effect of improving the breaking strength, elongation at break, and adhesiveness of the cured product. One type of these fillers may be used alone, or two or more types may be used in combination.

When calcium carbonate is used, surface-treated fine calcium carbonate and a calcium carbonate having a large particle size such as ground calcium carbonate are preferably used in combination. The surface-treated fine calcium carbonate preferably has a particle size of not more than 0.5 $\mu$m, and is preferably surface-treated with a fatty acid or a fatty acid salt. The calcium carbonate having a large particle size preferably has a particle size of not less than 1 $\mu$m, and may be non-surface-treated.

The curable composition in accordance with an embodiment of the present invention may contain balloons (preferably having an average particle size of not less than 0.1 mm). Using balloons provides a grainy surface texture such as a sand-laden texture or sandstone texture, while also reducing weight.

The balloons are spherical fillers which are hollow inside. Examples of the materials for the balloons encompass, but are not limited to, inorganic materials such as glass, shirasu, and silica, and organic materials such as phenol resin, urea resin, polystyrene, and saran. An inorganic material and an organic material may be formed into a composite or may be layered to form multiple layers. One type of balloon may be used alone, or a plurality of types made of differing materials may be used in combinations. Furthermore, the surface of the balloons used may be processed or coated, or may be treated with various surface treating agents. For example, organic balloons may be coated with e.g. calcium carbonate, talc, or titanium oxide, or inorganic balloons may be surface-treated with an adhesiveness imparting agent.

In order to obtain a grainy surface texture such as a sand-laden texture or a sandstone texture, the particle size of the balloons is preferably not less than 0.1 mm, more preferably 0.2 mm to 5.0 mm, and even more preferably 0.5 mm to 5.0 mm. If the particle size of the balloons is less than 0.1 mm, adding the balloons in even a large amount will only increase the viscosity of the composition and may not provide a grainy texture. The used amount of the balloons can be determined easily by the desired degree of the grainy texture such as the sand-laden texture or sandstone texture. Normally, balloons having a particle size of not less than 0.1 mm are used in an amount so that the volume concentration in the curable composition is preferably 5 vol% to 25 vol%, and more preferably 8 vol% to 22 vol%. If the volume concentration of the balloons is less than 5 vol%, there will not be a grainy texture. If the volume concentration of the balloons exceeds 25 vol%, the curable composition will have an increased viscosity which will negatively affect workability, the modulus of the cured product will also increase, and there will tend to be a deterioration in the basic performance of the curable composition. Note that "vol%" stands for "volume %".

When using balloons, it is possible to add (i) an anti-slip agent such as that disclosed in Japanese Patent Application Publication Tokukai No. 2000-154368 and (ii) an amine compound for giving the surface of the cured product a rough texture and matte appearance, such as that disclosed in Japanese Patent Application Publication Tokukai No. 2001-164237, and in particular a primary and/or secondary amine having a melting point of not less than 35°C.

Specific examples of the balloons encompass those disclosed in Japanese Patent Application Publication, Tokukaihei, No. 2-129262, Japanese Patent Application Publication, Tokukaihei, No. 4-8788, Japanese Patent Application Publication, Tokukaihei, No. 4-173867, Japanese Patent Application Publication, Tokukaihei, No. 5-1225, Japanese Patent Application Publication, Tokukaihei, No. 7-113073, Japanese Patent Application Publication, Tokukaihei, No. 9-53063, Japanese Patent Application Publication, Tokukaihei, No. 10-251618, Japanese Patent Application Publication, Tokukai, No. 2000-154368, Japanese Patent Application Publication, Tokukai, No. 2001-164237, and WO 97/05201.

A curable composition in accordance with an embodiment of the present invention may contain a scale-like or particulate substance having a diameter that is not less than 0.1 mm, and preferably 0.1 mm to approximately 5.0 mm. Using a scale-like substance causes the surface to be rough due to the scale-like shape. Using a particulate substance gives the surface a grainy texture such as a sand-laden texture or sandstone texture.

Regarding preferable parameters such as diameters, amounts, and materials for scale-like or particulate substance, the disclosures of Japanese Patent Application Publication Tokukaihei No. 9-53063 can be applied.

The scale-like or particulate substance has a diameter of preferably not less than 0.1 mm, more preferably 0.1 mm to 5.0 mm, even more preferably 0.2 mm to 5.0 mm, and particularly preferably 0.5 mm to 5.0 mm. An optimally-sized substance is used in accordance with e.g. the material and/or design of an exterior wall. If a scale-like substance is used, the thickness thereof is preferably 1/10 to 1/5 the diameter (i.e., the thickness is preferably 0.01 mm to 1.00 mm).

The scale-like or particulate substance is used in an amount of preferably 1 part by weight to 200 parts by weight with respect to 100 parts by weight of the curable composition. The used amount of the scale-like or particulate substance is determined as appropriate in accordance with e.g. the size of each scale-like or particulate substance, and the material and design of the exterior wall. The following can be used as the scale-like or particulate substance: silica sand; natural substances such as mica; synthetic rubbers; synthetic resins; and inorganic substances such as alumina. In order to improve design when filling the curable composition into a joint, the substance is colored to have an optimal color in accordance with e.g. the material and design of the exterior wall.

It is possible to form roughness in the surface of the cured product and improve design also by configuring the curable composition in accordance with an embodiment of the present invention to include cured product particles obtained from the curable composition or another curable composition. Preferable parameters such as diameters, amounts, and materials for the cured product particles obtained from the curable composition are as follows, as disclosed in Japanese Patent Application Publication Tokukai No. 2001-115142. The cured product particles obtained from the curable composition have a diameter of preferably 0.1 mm to 1 mm, and more preferably 0.2 mm to 0.5 mm. The cured product particles obtained from the curable composition are used in an amount of preferably 5 weight% to 100 weight% of the curable composition, and more preferably 20 weight% to 50 weight% of the curable composition.

The curable composition in accordance with an embodiment of the present invention can contain a silicate. The silicate acts as a crosslinking agent and has a function of improving the recoverability, durability, and creep resistance of the organic polymer which is the component (A) in accordance with an embodiment of the present invention. The silicate also has the effect of improving the following properties of the cured product: adhesiveness, water-resistant adhesiveness, and adhesion durability under high temperature and high humidity.

Specific examples of the silicates encompass tetraalkoxysilanes (tetraalkyl silicates) such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, and tetra-t-butoxysilane, and partially hydrolyzed condensates of these.

Partially hydrolyzed condensates of tetraalkoxysilanes are more preferable because they have a greater effect of improving recoverability, durability, and creep resistance as compared to tetraalkoxysilanes.

Examples of the partially hydrolyzed condensates of tetraalkoxysilanes encompass those obtained by a typical method of adding water to a tetraalkoxysilane and performing partial hydrolysis and condensation.

If a silicate is used, the used amount thereof with respect to a combined total of 100 parts by weight of the component (A) and the component (B) is preferably 0.1 parts by weight to 8 parts by weight, and more preferably 0.5 parts by weight to 3 parts by weight.

The curable composition in accordance with an embodiment of the present invention may contain an adhesiveness imparting agent other than the component (D). A silane coupling agent can be added as the adhesiveness imparting agent.

Specific examples of the silane coupling agent encompass: amino-group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane; isocyanate-group-containing silanes such as γ-isocyanatepropyltrimethoxysilane, γ-isocyanatepropyltriethoxysilane, γ-isocyanatepropylmethyldimethoxysilane, α-isocyanatemethyltrimethoxysilane, and α-isocyanatemethyldimethoxymethylsilane; mercapto-group-containing silanes such as γ-mercaptopropyltrimethoxysilane, γ-mereaptopropyltrie thoxysilane, and γ-mercaptopropylmethyldimethoxysilane; and epoxy-group-containing silanes such as γ-glycidoxypropyltrimethoxysilane and β-(3,4-epoxycyclohexyl)ethyltrimethoxysilane.

One type of these adhesiveness imparting agents may be used alone, or two or more types may be used in combination.

The used amount of the adhesiveness imparting agent with respect to a combined total of 100 parts by weight of the component (A) and the component (B) is preferably 0 parts by weight to 10 parts by weight, more preferably 0 parts by weight to 5 parts by weight, and even more preferably 0 parts by weight to 3 parts by weight. Because the adhesiveness imparting agent tends to decrease the durability of the cured product, a smaller used amount is more preferable, and it is preferable that the used amount of the adhesiveness imparting agent is substantially zero.

The curable composition in accordance with an embodiment of the present invention can contain an antioxidant (anti-aging agent). Using an antioxidant makes it possible to increase the heat resistance of the cured product.

Examples of the antioxidant encompass hindered phenol-based antioxidants, monophenol-based antioxidants, bisphenol-based antioxidants, and polyphenol-based antioxidants. Hindered phenol-based antioxidants are particularly preferable as the antioxidant. Specific examples of the antioxidant are also disclosed in Japanese Patent Application Publication Tokukaihei No. 4-283259 and Japanese Patent Application Publication Tokukaihei No. 9-194731.

The used amount of the antioxidant with respect to a combined total of 100 parts by weight of the component (A) and the component (B) is preferably 0.1 parts by weight to 10 parts by weight, and more preferably 0.2 parts by weight to 5 parts by weight.

The curable composition in accordance with an embodiment of the present invention can contain a light stabilizer. Using a light stabilizer makes it possible to prevent deterioration of the cured product due to photooxidation.

Examples of the light stabilizer encompass benzotriazole-based compounds, hindered amine-based compounds, and benzoate-based compounds. Hindered amine-based compounds are particularly preferable as the light stabilizer.

The used amount of the light stabilizer with respect to a combined total of 100 parts by weight of the component (A) and the component (B) is preferably 0.1 parts by weight to 10 parts by weight, and more preferably 0.2 parts by weight to 5 parts by weight. Specific examples of the light stabilizer are also disclosed in Japanese Patent Application Publication Tokukaihei No. 9-194731.

The curable composition in accordance with an embodiment of the present invention can contain an ultraviolet absorbent. Using an ultraviolet absorbent makes it possible to increase the weather resistance of the surface of the cured product.

Examples of the ultraviolet absorbent encompass benzophenone-based compounds, benzotriazole-based compounds, salicylate-based compounds, substituted tolyl-based compounds, and metal chelating compounds. Benzotriazole-based compounds are particularly preferable as the ultraviolet absorbent.

The used amount of the ultraviolet absorbent with respect to a combined total of 100 parts by weight of the component (A) and the component (B) is preferably 0.1 parts by weight to 10 parts by weight, and more preferably 0.2 parts by weight to 5 parts by weight.

The curable composition in accordance with an embodiment of the present invention can contain a photocurable substance. Using a photocurable substance causes a film of the photocurable substance to be formed on the surface of the cured product, which makes it possible to improve the stickiness and weather resistance of the cured product. The term "photocurable substance" refers to a substance for which the effects of light cause, in a fairly short period of time, chemical changes in the molecular structure of the substance, such that changes in physical properties, such as curing, occur. There are many known examples of such compounds, such as organic monomers, oligomers, resins, and compositions containing any of these. Commercially available compounds can be used as such compounds. Representative examples encompass unsaturated acrylic compounds, polyvinyl cinnamates, and azide resins.

Examples of unsaturated acrylic compounds encompass monomers having a single or multiple acrylic or methacrylic unsaturated groups, oligomers having a single or multiple acrylic or methacrylic unsaturated groups, and mixtures thereof, and specifically include (i) monomers such as propylene (or butylene or ethylene) glycol di(meth)acrylate, and neopentyl glycol di(meth)acrylate, and (ii) oligoesters thereof having a molecular weight of 10,000 or lower. Specific examples encompass the following special acrylates: (bifunctional) ARONIX M-210, ARONIX M-215, ARONIX M-220, ARONIX M-233, ARONIX M-240, and ARONIX M-245; (trifunctional) ARONIX M-305, ARONIX M-309, ARONIX M-310, ARONIX M-315, ARONIX M-320, and ARONIX M-325; and (polyfunctional) ARONIX M-400. In particular, a compound containing an acrylic functional group is preferable, and a compound having a per-molecule average of not less than three acrylic functional groups is preferable. (Each of the abovementioned "ARONIX" is a product of Toagosei Co., Ltd.).

Examples of the polyvinyl cinnamates encompass (i) photosensitive resins which (a) have a cinnamoyl group as a photosensitive group, and (b) are obtained by esterification of polyvinyl alcohol with cinnamic acid, and (ii) many derivatives of polyvinyl cinnamate.

Azide resins are known as photosensitive resins having azide groups as photosensitive groups. Examples of azide resins encompass photosensitive rubber solutions normally containing a diazide compound as a photosensitizer. Detailed examples of the azide resins are also described in "Kankosei Jushi [Photosensitive Resins]" (published on Mar. 17, 1972 by Insatsu Gakkai Shuppanbu Ltd., from p. 93, from p. 106, and from p. 117). One type of these resins can be used alone, or a combination may be used. A sensitizer can be added to these resins as necessary. The addition of a sensitizer (such as ketones or nitro compounds) or an accelerator (such as amines) may increase the effect.

The used amount of the photocurable substance with respect to a combined total of 100 parts by weight of the component (A) and the component (B) is preferably 0.1 parts by weight to 20 parts by weight, and more preferably 0.5 parts by weight to 10 parts by weight. If the used amount of the photocurable substance is less than 0.1 parts by weight, there will be no effect of increasing the weather resistance. If the used amount of the photocurable substance is more than 20 parts by weight, the cured product may become too hard and may crack.

The curable composition in accordance with an embodiment of the present invention can contain an oxygen curable substance. Examples of the oxygen curable substance encompass unsaturated compounds which can react with oxygen in the air. Oxygen curable substances serve to prevent (i) surface stickiness and (ii) the attachment of dirt or dust to the surface of the cured product by reacting with oxygen in the air to form a cured film near the surface of the cured product.

Examples of the oxygen curable substance encompass: drying oils, representative examples of which are tung oil and linseed oil, and various alkyd resins obtained by modification of these compounds; drying oil-modified acrylic polymers, drying oil-modified epoxy-based resins, and drying oil-modified silicone resins; liquid polymers such as 1,2-polybutadiene, 1,4-polybutadiene and polymers of C5-C8 dienes, which are obtained by polymerizing or copolymerizing diene compounds (such as butadiene, chloroprene, isoprene, and 1,3-pentadiene); liquid copolymers such as NBR and SBR, which are obtained by copolymerizing these diene-based compounds with a monomer copolymerizable therewith (for example, acrylonitrile or styrene) such that the diene-based compound becomes the main component; and various modified products of these (for example, maleic-acid-modified products and boiled-oil-modified products). One type of these substances may be used alone, or two or more types may be used in combination. Among these examples, tung oil and liquid diene-based polymers are particularly preferable. Using an oxygen curable substance in combination with a metal dryer or a catalyst that promotes an oxidative curing reaction may enhance the effect. Examples of the catalysts and metal dryers encompass metal salts such as cobalt naphthenate, lead naphthenate, zirconium naphthenate, cobalt octylate, and zirconium octylate, and amine compounds.

The used amount of the oxygen curable substance with respect to a combined total of 100 parts by weight of the component (A) and the component (B) is preferably 0.1 parts by weight to 20 parts by weight, and more preferably 0.5 parts by weight to 10 parts by weight. If the used amount of the oxygen curable substance is less than 0.1 parts by weight, there will be insufficient improvement of a contamination property. If the used amount of the oxygen curable substance is more than 20 parts by weight, there may be a deterioration in e.g. the tensile properties of the cured product.

The curable composition in accordance with an embodiment of the present invention can contain a thixotropy imparting agent (anti-sagging agent) for preventing sagging and improving workability.

Examples of the anti-sagging agent are not particularly limited, but encompass: polyamide waxes; hydrogenated castor oil derivatives; and metal soaps such as calcium stearate, aluminum stearate, and barium stearate. It is also possible to obtain a composition having high thixotropy and favorable workability when using (i) a rubber powder having a particle diameter of 10 pm to 500 pm as disclosed in Japanese Patent Application Publication Tokukaihei No. 11-349916, or (ii) organic fibers as disclosed in Japanese Patent Application Publication Tokukai No. 2003-155389. One type of these thixotropy imparting agents (anti-sagging agents) may be used alone, or two or more types may be used in combination.

The used amount of the thixotropy imparting agent with respect to a combined total of 100 parts by weight of the component (A) and the component (B) is preferably 0.1 parts by weight to 20 parts by weight.

The curable composition in accordance with an embodiment of the present invention can contain a compound having epoxy group in each molecule. Using such a compound having an epoxy group makes it possible to increase the recoverability of the cured product.

Examples of the compound having an epoxy group encompass epoxidized unsaturated fats and oils, epoxidized unsaturated fatty acid esters, cycloaliphatic epoxy compounds, and epichlorohydrin derivatives, and mixtures of these. Specific examples encompass epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. Out of these examples, E-PS is particularly preferable as the compound having an epoxy group.

The used amount of the epoxy compound with respect to a combined total of 100 parts by weight of the component (A) and the component (B) is preferably 0.5 parts by weight to 50 parts by weight.

The curable composition in accordance with an embodiment of the present invention can contain a flame retardant such as: phosphorus plasticizers such as ammonium polyphosphate and tricresyl phosphate; aluminum hydroxide; magnesium hydroxide; and thermally expandable graphite. One type of these flame retardants may be used alone, or two or more types may be used in combination.

The used amount of the flame retardant with respect to a combined total of 100 parts by weight of the component (A) and the component (B) is preferably 5 parts by weight to 200 parts by weight, and more preferably 10 parts by weight to 100 parts by weight.

The curable composition in accordance with an embodiment of the present invention can contain a tackifier. The tackifier resin is not particularly limited, as long as it is a tackifier resin normally used, regardless of whether being solid or liquid at normal temperature. Specific examples encompass styrene-based block copolymers and hydrogenated products thereof, phenol-based resins, modified phenol-based resins (for example, cashew oil-modified phenol-based resins and tall oil-modified phenol-based resins), terpene phenol-based resins, xylene-phenol-based resins, cyclopentadiene-phenol-based resins, coumarone-indene-based resins, rosin-based resins, rosin ester-based resins, hydrogenated rosin ester-based resins, xylene-based resins, low molecular weight polystyrene-based resins, styrene copolymer resins and hydrogenated products thereof (for example, a styrene-butadiene-styrene block copolymer (SBS), a styrene-isoprene-styrene block copolymer (SIS), a styrene-ethylene butylene-styrene block copolymer (SEBS), a styrene-ethylene propylene-styrene block copolymer (SEPS), and a styrene-isobutylene-styrene block copolymer (SIBS)), petroleum resins (for example, C5 hydrocarbon-based resin, C9 hydrocarbon-based resin, and C5C9 hydrocarbon copolymer resin), hydrogenated petroleum resins, terpene-based resins, and DCPD resin petroleum resins. One type of these tackifiers may be used alone, or two or more types may be used in combination.

The used amount of the tackifier with respect to a combined total of 100 parts by weight of the component (A) and the component (B) is preferably 5 parts by weight to 100 parts by weight.

The curable composition in accordance with an embodiment of the present invention may contain a solvent in order to decrease the viscosity of the composition, increase thixotropy of the composition, and improve the workability of the composition. The solvent is not limited. Any of various compounds can be used as the solvent. Specific examples of the solvent encompass: hydrocarbon-based solvents such as toluene, xylene, heptane, hexane, and petroleum-based solvents; halogen-based solvents such as trichloroethylene; ester-based solvents such as ethyl acetate and butyl acetate; ketone-based solvents such as acetone, methyl ethyl ketone, and methyl isobutyl ketone; alcohol-based solvents such as methanol, ethanol, and isopropyl alcohol; and silicone-based solvents such as hexamethylcyclotrisiloxane, octamethylcyclotetrasiloxane, and decamethylcyclopentasiloxane. One type of these solvents may be used alone, or two or more types may be used in combination.

If the solvent is used in a large amount, there may be an increase in toxicity to humans, and volumetric contraction may be observed in the cured product. As such, the used amount of the solvent with respect to a combined total of 100 parts by weight of the component (A) and the component (B) is preferably not more than 3 parts by weight, more preferably not more than 1 part by weight, and most preferably substantially zero.

The curable composition in accordance with an embodiment of the present invention can contain a physical property adjusting agent in order to adjust e.g. the tensile properties and hardness of the cured product. Examples of the physical property adjusting agent are not particularly limited, but encompass: alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, and γ-glycidoxypropylmethyldiisopropenoxysilane; silicone varnishes; and polysiloxanes. One type of these physical property adjusting agents may be used alone, or two or more types may be used in combination.

The curable composition in accordance with an embodiment of the present invention can contain a compound which, by hydrolysis, produces a compound having a monohydric silanol group in its molecule. Using such a compound makes it possible to lower the modulus of the cured product without worsening the stickiness of the surface of the cured product. In particular, compounds that produce trimethylsilanol are preferable. Examples of a compound which, by hydrolysis, produces a compound having a monohydric silanol group in its molecule encompass a compound as disclosed in Japanese Patent Application Publication Tokukaihei No. 5-117521. Other examples encompass: silicon compounds which (i) are derivatives of alkyl alcohols such as hexanol, octanol, and decanol and (ii) produce $R_3SiOH$ such as trimethylsilanol by hydrolysis; and silicon compounds which (i) are derivatives of polyhydric alcohols having not less than 3 hydroxy groups, such as trimethylolpropane, glycerin, pentaerithritol, or sorbitol and (ii) produce $R_3SiOH$ such as trimethylsilanol by hydrolysis, as disclosed in Japanese Patent Application Publication Tokukaihei No. 11-241029.

Another example is a silicon compound which (i) is a derivative of an oxypropylene polymer and (ii) produces $R_3SiOH$ such as trimethylsilanol by hydrolysis, as disclosed in Japanese Patent Application Publication Tokukaihei No. 7-258534. It is also possible to use a polymer as disclosed in Japanese Patent Application Publication Tokukaihei No. 6-279693, which polymer has (i) a crosslinkable reactive silicon-containing group and (ii) a silicon-containing group that can become a monosilanol-containing compound by hydrolysis.

The used amount of the compound which produces, by hydrolysis, a compound having a monohydric silanol group in its molecule, with respect to a combined total of 100 parts by weight of the component (A) and the component (B), is preferably 0.1 parts by weight to 20 parts by weight, and more preferably 0.5 parts by weight to 10 parts by weight.

The curable composition in accordance with an embodiment of the present invention can be prepared as a one-component curable composition in which all components are mixed in advance, which is stored in a sealed state, and which cures at room temperature by moisture in the air after being applied.

If the curable composition is prepared as a one-component curable composition, since all the components are mixed in advance, it is preferable that moisture-containing components be dehydrated and dried prior to use, or be dehydrated during mixing and kneading by, for example, pressure reduction. If the curable composition is prepared as a two-component curable composition, since there is no need for the curing catalyst to be contained in a main agent containing the polymer having the reactive silicon group, there is little risk of gelation even when a small amount of moisture remains in the mixture. However, if the curable composition is prepared as a two-component curable composition and long-term storage stability is required, dehydration and drying are preferably performed.

As a method for dehydration and drying, in the case of solids such as powder, thermal drying or dehydration under reduced pressure is preferable. As a method for dehydration and drying, in the case of liquids, dehydration under reduced pressure or dehydration using, for example, synthetic zeolite, active alumina, silica gel, quick lime, or magnesium oxide is preferable. In addition to these methods for dehydration and drying, dehydration may also be carried out by adding an alkoxysilane compound to react with water, such as n-propyltrimethoxysilane, vinyltrimethoxysilane, vinylmethyldimethoxysilane, methyl silicate, ethyl silicate, γ-mercaptopropylmethyldimethoxysilane, γ-mercaptopropylmethyldiethoxysilane, and γ-glycidoxypropyltrimethoxysilane. Dehydration may be carried out by adding an oxazolidine compound such as 3-ethyl-2-methyl-2-(3-methylbutyl)-1,3-oxazolidine to react with water. Dehydration may be carried out by adding a small amount of an isocyanate compound so as to react water with an isocyanate group. Storage stability of the curable composition can be improved by adding an alkoxysilane compound, oxazolidine compound, and/or isocyanate compound.

A method of preparing the curable composition in accordance with an embodiment of the present invention is not particularly limited. A normal method may be used, such as (1) a method in which the above described components are mixed and kneaded with use of e.g. a mixer, roller, or kneader, at normal temperature or while applying heat; and (2) a method in which a small amount of a suitable solvent is used to dissolve each respective component, and the resulting solutions are mixed together.

In an embodiment of the present invention, after the curable composition is exposed to atmospheric air, the action of moisture in e.g. the atmospheric air causes a three-dimensional network-like structure to form in the curable composition, and the curable composition cures into a solid (cured product) having rubber-like elasticity.

The curable composition in accordance with an embodiment of the present invention can be used for e.g. a pressure sensitive adhesive, a sealant, an adhesive agent, an impression material, a vibration-proofing material, a damping material, a sound-proofing material, a foamed material, a coating material, and a spray coating material. Examples of the sealant encompass sealants for use in buildings, ships, automobiles, and roads. A cured product obtained by curing the curable composition in accordance with an embodiment of the present invention has a low modulus, high elongation, and high recoverability. As such, out of the above uses, the present curable composition is even more suitable for a construction sealant, and particularly a sealant for working joints.

A one-component curable composition in accordance with an embodiment of the present invention is also suitable for sealants for curtain walls, veranda window frames, stone materials, and bridges. A one-component curable composition in accordance with an embodiment of the present invention is also suitable for a sealant for joints of external materials such as siding boards, which are used widely in construction.

The present curable composition has an excellent compression recovery rate. When the present curable composition is to be used as a one-component curable composition for a working joint, the compression recovery rate is preferably as high as possible. The compression recovery rate of the present curable composition is more preferably not less than 10%, even more preferably more than 10%, and particularly preferably not less than 15%. If the compression recovery rate is not less than 10%, the elongation and contraction of the cured product will more easily conform to elongation and contraction of external members occurring in the long term due to daily and seasonal changes. As such, there is no risk of damage such as cracks in the cured product or separation of the cured product from the members.

3. Joint Structure

A joint structure in accordance with an embodiment of the present invention is obtained by (i) using the one-component curable composition for a working joint as disclosed in "2. Curable Composition" to fill a working joint of a building and (ii) curing the one-component curable composition. The above configuration provides an excellent compression recovery rate, excellent ability to conform to displacement, and excellent durability to the joint structure in accordance with an embodiment of the present invention.

A method of producing the joint structure in accordance with an embodiment of the present invention, specifically a method of filling the curable composition, is not particularly limited, and may be a known method. Examples of methods for filling the curable composition encompass methods that use a manual caulking gun, an electrically-powered caulking gun, or a pneumatic caulking gun. Because the curable composition in accordance with an embodiment of the present invention is a one-component curable composition, after the curable composition has been used for filling, i.e., after the curable composition is exposed to atmospheric air, the action of moisture in the atmospheric air causes a three-dimensional network-like structure to form, such that a cured product is formed (i.e., such that a joint structure is formed).

4. Wall

A wall in accordance with an embodiment of the present invention includes a joint structure obtained by (i) using the one-component curable composition for a working joint as disclosed in "2. Curable Composition" to fill a working joint of a building and (ii) curing the one-component curable composition. The above configuration provides the wall in accordance with an embodiment of the present invention with excellent durability, excellent weather resistance, and excellent waterproofness.

Methods of producing a wall in accordance with an embodiment of the present invention, and specifically, methods of producing a joint structure, encompass the methods disclosed in "3. Joint Structure".

5. Construction Method

A construction method in accordance with an embodiment of the present invention includes the step of: using the one-component curable composition for a working joint as disclosed in "2. Curable Composition" to fill a working joint of a building and curing the one-component curable composition. By having such a step, the construction method in accordance with an embodiment of the present invention is able to provide a building (for example, a joint structure or a wall) having excellent durability, excellent weather resistance, and excellent waterproofness.

The actual operations involved in the construction method in accordance with an embodiment of the present invention can be said to be filling with use of the curable composition. Methods of filling with use of the curable composition encompass the methods described in "3. Joint Structure".

Embodiments of the present invention may be as follows.

[1] A one-component curable composition for a working joint, including: (A) a polyoxyalkylene-based polymer having a per-molecule average of 1.2 to 5 reactive silicon groups represented by General Formula (1); (D) a silane compound obtained by partial condensation of an aminosilane compound having a reactive silicon group, or a silane compound obtained by partial condensation of an aminosilane compound having a reactive silicon group with an alkoxysilane compound other than an aminosilane; and (E) a tetravalent organotin compound in an amount of not less than 0.05 parts by weight but less than 1 part by weight with respect to 100 parts by weight of the component (A),

$$-SiX_3 \qquad (1)$$

where each X independently represents a hydroxy group or a hydrolyzable group.

[2] The one-component curable composition according to [1], further including: (B) a reactive plasticizer that is a polyoxyalkylene-based polymer having a per-molecule average of 0.5 to less than 1.2 reactive silicon groups represented by General Formula (2):

$$-SiR^1_{3-a}X_a\cdots \qquad (2)$$

where: each $R^1$ independently represents an alkyl group having 1 to 20 carbon atoms, an aryl group having 6 to 20 carbon atoms, and an aralkyl group having 7 to 20 carbon atoms; X is the same as in General Formula (1); and "a" represents an integer of 1 to 3.

[3] The one-component curable composition according to [1] or [2], wherein the component (B) contains (B1) a polyoxyalkylene-based polymer having, per molecule, one reactive silicon group represented by General Formula (2).

[4] The one-component curable composition according to any one of [1] to [3], wherein the component (B) is obtained by introducing a reactive silicon group represented by General Formula (2) into (B') a polyoxyalkylene-based precursor polymer having only one functional group into which a reactive silicon group can be introduced, which polyoxyalkylene-based precursor polymer is obtained by reacting an initiator having only one hydroxy group per molecule with alkylene oxide.

[5] The one-component curable composition according to any one of [1] to [4], wherein the component (B) is obtained by introducing a reactive silicon group represented by General Formula (2) into (B") a polyoxyalkylene-based precursor polymer mixture having a functional group into which a reactive silicon group can be introduced, which polyoxyalkylene-based precursor polymer mixture is obtained by reacting an alkylene oxide with a mixture of (i) an initiator having only one hydroxy group per molecule and (ii) an initiator having two or more hydroxy groups per molecule.

[6] The one-component curable composition according to any one of [1] to [5], wherein the polyoxyalkylene-based polymers of the component (A) and the component (B) are each a polyoxypropylene-based polymer.

[7] The one-component curable composition according to any one of [1] to [6], further including (C1) a polyether-based plasticizer having no reactive silicon group represented by General Formula (1) or General Formula (2).

[8] A joint structure obtained by (i) using the one-component curable composition according to any one of [1] to [7] to fill a working joint of a building and (ii) curing the one-component curable composition.

[9] A wall including: a joint structure obtained by (i) using the one-component curable composition according to any one of [1] to [7] to fill a working joint of a building and (ii) curing the one-component curable composition.

[10] A construction method including the step of: using the one-component curable composition according to any one of [1] to [7] to fill a working joint of a building and curing the one-component curable composition.

Examples

The following description will discuss an embodiment of the present invention in detail with reference to Examples and Comparative Examples. Note that the present invention is not limited to these examples. In the following descriptions, the wording "X group-terminated Y polymer" means a Y polymer having an X group as a terminal group.

Synthesis Example 1

Propylene oxide was polymerized with use of (i) polypropylene glycol having a number average molecular weight of 3,000 as an initiator and (ii) a zinc hexacyanocobaltate glyme complex catalyst. As a result, a hydroxy group-terminated polyoxypropylene polymer was obtained having a number average molecular weight of approximately 29,000, as calculated by conversion from the amount of hydroxy groups. Next, a methanol solution containing 1.2 equivalents of sodium methoxide (NaOMe) with respect to the hydroxy groups of the hydroxy group-terminated polyoxypropylene polymer was added, and the methanol was removed. Then, 1.3 equivalents of allyl chloride was further added to convert terminal hydroxy groups to allyl groups. Devolatilization was carried out under reduced pressure to remove the unreacted allyl chloride, so as to obtain an unrefined allyl group-terminated polyoxypropylene polymer.

The resulting unrefined allyl group-terminated polyoxypropylene polymer (100 parts by weight) was mixed with n-hexane (300 parts by weight) and water (300 parts by weight), and stirring was carried out. Thereafter, the water was removed by centrifugal separation. The resulting hexane solution was mixed with further water (300 parts by weight) and stirring was carried out. Thereafter the water was removed by centrifugal separation. Thereafter, devolatilization was carried out under reduced pressure to remove hexane from the resulting hexane solution. In this way, an allyl group-terminated polyoxypropylene polymer was obtained.

The resulting allyl group-terminated polyoxypropylene polymer (100 parts by weight) was reacted with triethoxysilane at 90°C for 2 hours, with use of 150 ppm of a catalyst. The catalyst was an isopropanol solution of a platinum-vinylsiloxane complex, the platinum amount in the solution being 3 wt%. The reaction produced a triethoxysilyl group-terminated polyoxypropylene polymer. Through measurements using $^1$H-NMR (measurement in a $CDCl_3$ solvent, with use of JNM-LA400 manufactured by JEOL Ltd.), it was confirmed that, in the resulting triethoxysilyl group-terminated polyoxypropylene polymer, there was a per-molecule average of 1.7 terminal triethoxysilyl groups.

Methanol was added to the obtained triethoxysilyl group-terminated polyoxypropylene polymer, using a 0.5 wt% methanol solution of hydrochloric acid as a catalyst, and stirring was carried out for 2 hours at 70°C, so as to convert terminal triethoxysilyl groups into trimethoxysilyl groups. Lastly, devolatilization was carried out under reduced pressure to remove the methanol. In this way, a trimethoxysilyl group-terminated polyoxypropylene polymer (a1) was obtained. Through measurements using $^1$H-NMR (measurement in a $CDCl_3$ solvent, with use of JNM-LA400 manufactured by JEOL Ltd.), it was confirmed that, in the resulting trimethoxysilyl group-terminated polyoxypropylene polymer (a1), there was a per-molecule average of 1.7 terminal trimethoxysilyl groups. The trimethoxysilyl group-terminated polyoxypropylene polymer (a1) obtained had a number average molecular weight of 29,000 (polystyrene equivalent, measured by GPC). The trimethoxysilyl group-terminated polyoxypropylene polymer (a1) is the component (A) in an embodiment of the present invention.

Synthesis Example 2

Propylene oxide was polymerized with use of (i) polypropylene glycol having a number average molecular weight of 3,000 as an initiator and (ii) a zinc hexacyanocobaltate glyme complex catalyst. As a result, a hydroxy group-terminated polyoxypropylene polymer was obtained having a number average molecular weight of approximately 29,000, as calculated by conversion from the amount of hydroxy groups. Next, a methanol solution containing 1.2 equivalents of NaOMe with respect to the hydroxy groups of the hydroxy group-terminated polyoxypropylene polymer was added, and the methanol was removed. Then, 1.3 equivalents of allyl chloride was further added to convert terminal hydroxy groups to allyl groups. Devolatilization was carried out under reduced pressure to remove the unreacted allyl chloride, so as to obtain an unrefined allyl group-terminated polyoxypropylene polymer.

The resulting unrefined allyl group-terminated polyoxypropylene polymer (100 parts by weight) was mixed with n-hexane (300 parts by weight) and water (300 parts by weight), and stirring was carried out. Thereafter, the water was removed by centrifugal separation. The resulting hexane solution was mixed with further water (300 parts by weight) and stirring was carried out. The water was then removed by centrifugal separation. Thereafter, devolatilization was carried out under reduced pressure to remove hexane from the resulting hexane solution. In this way, an allyl group-terminated polyoxypropylene polymer was obtained.

The resulting allyl group-terminated polyoxypropylene polymer (100 parts by weight) was reacted with triethoxysilane at 90°C for 2 hours, with use of 150 ppm of a catalyst. The catalyst was an isopropanol solution of a platinum-vinylsiloxane complex, the platinum amount in the solution being 3 wt%. The reaction produced a triethoxysilyl group-terminated polyoxypropylene polymer. Through measurements using $^1$H-NMR (measurement in a $CDCl_3$ solvent, with use of JNM-LA400 manufactured by JEOL Ltd.), it was confirmed that, in the resulting triethoxysilyl group-terminated polyoxypropylene polymer, there was a per-molecule average of 1.4 terminal triethoxysilyl groups.

Methanol was added to the obtained triethoxysilyl group-terminated polyoxypropylene polymer, using a 0.5 wt% methanol solution of hydrochloric acid as a catalyst, and stirring was carried out for 2 hours at 70°C, so as to convert terminal triethoxysilyl groups into trimethoxysilyl groups. Lastly, devolatilization was carried out under reduced pressure to remove the methanol. In this way, a trimethoxysilyl group-terminated polyoxypropylene polymer (a2) was obtained. Through measurements using $^1$H-NMR (measurement in a $CDCl_3$ solvent, with use of JNM-LA400 manufactured by JEOL Ltd.), it was confirmed that, in the resulting trimethoxysilyl group-terminated polyoxypropylene polymer (a2), there was a per-molecule average of 1.4 terminal trimethoxysilyl groups. The trimethoxysilyl group-terminated polyoxypropylene polymer (a2) obtained had a number average molecular weight of 29,000 (polystyrene equivalent, measured by GPC). The trimethoxysilyl group-terminated polyoxypropylene polymer (a2) is the component (A) in an embodiment of the present invention.

Synthesis Example 3

Propylene oxide was polymerized with use of (i) polypropylene glycol having a number average molecular weight of 3,000 as an initiator and (ii) a zinc hexacyanocobaltate glyme complex catalyst. As a result, a hydroxy group-terminated polyoxypropylene polymer was obtained having a number average molecular weight of approximately 29,000, as calculated by conversion from the amount of hydroxy groups. Next, a methanol solution containing 1.2 equivalents of NaOMe with respect to the hydroxy groups of the hydroxy group-terminated polyoxypropylene polymer was added, and the methanol was removed. Then, 1.3 equivalents of allyl chloride was further added to convert terminal hydroxy groups to allyl groups. Devolatilization was carried out under reduced pressure to remove the unreacted allyl chloride, so as to obtain an unrefined allyl group-terminated polyoxypropylene polymer.

The resulting unrefined allyl group-terminated polyoxypropylene polymer (100 parts by weight) was mixed with n-hexane (300 parts by weight) and water (300 parts by weight), and stirring was carried out. Thereafter, the water was removed by centrifugal separation. The resulting hexane solution was mixed with further water (300 parts by weight) and stirring was carried out. The water was then removed by centrifugal separation. Thereafter, devolatilization was carried out under reduced pressure to remove hexane from the resulting hexane solution. In this way, an allyl group-terminated polyoxypropylene polymer was obtained.

The resulting allyl group-terminated polyoxypropylene polymer (100 parts by weight) was reacted with dimethoxymethylsilane at 90°C for 2 hours, with use of 150 ppm of a catalyst. The catalyst was an isopropanol solution of a platinum-vinylsiloxane complex, the platinum amount in the solution being 3 wt%. The reaction produced a dimethoxymethylsilyl group-terminated polyoxypropylene polymer (a3). Through measurements using $^1$H-NMR (measurement in a $CDCl_3$ solvent, with use of JNM-LA400 manufactured by JEOL Ltd.), it was confirmed that, in the resulting dimethoxymethylsilyl group-terminated polyoxypropylene polymer (a3), there was a per-molecule average of 1.8 terminal dimethoxymethylsilyl groups. The dimethoxymethylsilyl group-terminated polyoxypropylene polymer (a3) obtained had a number average molecular weight of 29,000 (polystyrene equivalent, measured by GPC).

Synthesis Example 4

Polymerization of propylene oxide was carried out using (i) an initiator consisting of polyoxypropylene glycol (number average molecular weight: 14,600) and n-butanol mixed at a weight ratio of 10:1, and (ii) a zinc hexacyanocobaltate glyme complex catalyst. A polypropylene oxide mixture was obtained having a number average molecular weight of 7,700 (polyoxypropylene glycol monobutyl ether having a number average molecular weight of 6,500, and polyoxypropylene glycol having a number average molecular weight of 18,000 (weight ratio: 9:1)). Next, a methanol solution containing 1.2 equivalents of NaOMe with respect to the hydroxy groups of the polypropylene oxide containing hydroxy groups was added, and the methanol was removed. Then, allyl chloride was further added to convert terminal hydroxy groups to allyl groups. Devolatilization was carried out under reduced pressure to remove the unreacted allyl chloride, so as to obtain unrefined polypropylene oxide having an allyl group. The resulting unrefined polypropylene oxide having an allyl group (100 parts by weight) was mixed with n-hexane (300 parts by weight) and water (300 parts by weight), and stirring was carried out. Thereafter, the water was removed by centrifugal separation. The resulting hexane solution was mixed with further water (300 parts by weight) and stirring was carried out. The water was then removed by centrifugal separation. Thereafter, devolatilization was carried out under reduced pressure to remove hexane from the resulting hexane solution. Thus, a polyoxypropylene polymer mixture was obtained in which (i) the main component had an allyl group introduced in only one terminal thereof and (ii) the number average molecular weight was approximately 7,700 (polystyrene equivalent, measured by GPC). The resulting polyoxypropylene polymer having an allyl group (100 parts by weight) was reacted with dimethoxymethylsilane (1.9 parts by weight) at 90°C for 2 hours, with use of 36 ppm of a catalyst. The catalyst was an isopropanol solution of a platinum-vinylsiloxane complex, the platinum amount in the solution being 3 wt%. The reaction produced a polyoxypropylene polymer (b1) having a per-molecule average of 0.9 dimethoxymethylsilyl groups. The polyoxypropylene polymer (b1) obtained had a number average molecular weight of 7,700 (polystyrene equivalent, measured by GPC). The polyoxypropylene polymer (b1) having the dimethoxymethylsilyl group is the component (B) in an embodiment of the present invention.

Synthesis Example 5

Propylene oxide was polymerized with use of (i) polypropylene glycol having a number average molecular weight of 2,000 as an initiator and (ii) a zinc hexacyanocobaltate glyme complex catalyst. As a result, a hydroxy group-terminated polyoxypropylene polymer was obtained having a number average molecular weight of approximately 16,000. Next, a methanol solution containing 1.2 equivalents of NaOMe with respect to the hydroxy groups of the hydroxy group-terminated polyoxypropylene polymer was added, and the methanol was removed. Then, 1.3 equivalents of allyl chloride was further added to convert terminal hydroxy groups to allyl groups. Devolatilization was carried out under reduced pressure to remove the unreacted allyl chloride, so as to obtain an unrefined allyl group-terminated polyoxypropylene polymer.
The resulting unrefined allyl group-terminated polyoxypropylene polymer (100 parts by weight) was mixed with n-hexane (300 parts by weight) and water (300 parts by weight), and stirring was carried out. Thereafter, the water was removed by centrifugal separation. The resulting hexane solution was mixed with further water (300 parts by weight) and stirring was carried out. The water was then removed by centrifugal separation. Thereafter, devolatilization was carried out under reduced pressure to remove hexane from the resulting hexane solution. In this way, an allyl group-terminated polyoxypropylene polymer was obtained.
The resulting allyl group-terminated polyoxypropylene polymer (100 parts by weight) was reacted with dimethoxymethylsilane at 90°C for 2 hours, with use of 150 ppm of a catalyst. The catalyst was an isopropanol solution of a platinum-vinylsiloxane complex, the platinum amount in the solution being 3 wt%. The reaction produced a dimethoxymethylsilyl group-terminated polyoxypropylene polymer (a4). Through measurements using $^1$H-NMR (measurement in a CDCl$_3$ solvent, with use of JNM-LA400 manufactured by JEOL Ltd.), it was confirmed that, in the resulting dimethoxymethylsilyl group-terminated polyoxypropylene polymer (a4), there was a per-molecule average of 1.3 terminal dimethoxymethylsilyl groups. The dimethoxymethylsilyl group-terminated polyoxypropylene polymer (a4) obtained had a number average molecular weight of 16,200 (polystyrene equivalent, measured by GPC).

(Example 1)

The following were measured out and then mixed with a spatula: 70 parts by weight of the trimethoxysilyl group-terminated polyoxypropylene polymer (a1) obtained in Synthesis Example 1, as the component (A); 30 parts by weight of the polyoxypropylene polymer (b1) having a per-molecule average of 0.9 dimethoxymethylsilyl groups obtained in Synthesis Example 4, as the component (B); 90 parts by weight of a polyether-based plasticizer as the component (C1) (product name: Actcol P-23, manufactured by Mitsui Chemicals & SKC Polyurethanes Inc., number average molecular weight: 3,000); 15 parts by weight of a diisodecyl phthalate plasticizer as the component (C2) (product name: DIDP, manufactured by J-PLUS Co., Ltd.); 130 parts by weight of surface-treated colloidal calcium carbonate (product name: Hakuenka CCR-B, manufactured by Shiraishi Kogyo Kaisha, Ltd.); 64 parts by weight of ground calcium carbonate (product name: Whiton SB, manufactured by Shiraishi Calcium Kaisha, Ltd.); 1 part by weight of a benzotriazole-based ultraviolet absorbent (product name: Tinuvin326, manufactured by BASF); 1 part by weight of a hindered amine-based light stabilizer (product name: Tinuvin770, manufactured by BASF); and 1 part by weight of a hindered phenol-based antioxidant (product name: Irganox1010, manufactured by BASF). A resulting mixture was then passed thrice through a three-roll paint mill so as to uniformly disperse the components. Thereafter, the resulting mixture was subjected to dehydration under reduced pressure at 120°C for 2 hours, and then cooled a temperature of not more than 50°C. Next, the following were added to and mixed with the resulting mixture: 4 parts by weight of vinyltrimethoxysilane (product name: A-171, manufactured by Momentive) as a dehydration agent; and 1 part by weight of a silane compound as the component (D) (product name: DYNASYLAN 1146, manufactured by Evonik). Thereafter, to the resulting mixture was added 0.2 parts by weight of a dioctyltin dilaurate as the component (E) (product name: NEOSTANN U-810, manufactured by Nitto Kasei Co., Ltd.) as a curing catalyst. The mixture was then kneaded in a state where substantially no moisture was present, to obtain a composition. Thereafter, the obtained composition was sealed in a cartridge that was a moisture-proof container. In this way, a one-component curable composition was obtained.

(Example 2)

The following were measured out and then mixed with a spatula: 100 parts by weight of the trimethoxysilyl group-terminated polyoxypropylene polymer (a2) obtained in Synthesis Example 2, as the component (A); 90 parts by weight of a polyether-based plasticizer as the component (C1) (product name: Actcol P-23, manufactured by Mitsui Chemicals & SKC Polyurethanes Inc., number average molecular weight: 3,000); 15 parts by weight of a diisodecyl phthalate plasticizer as the component (C2) (product name: DIDP, manufactured by J-PLUS Co., Ltd.); 160 parts by weight of surface-treated colloidal calcium carbonate (product name: Hakuenka CCR-B, manufactured by Shiraishi Kogyo Kaisha, Ltd.); 64 parts by weight of ground calcium carbonate (product name: Whiton SB, manufactured by Shiraishi Calcium Kaisha, Ltd.); 1 part by weight of a benzotriazole-based ultraviolet absorbent (product name: Tinuvin326, manufactured by BASF); 1 part by weight of a hindered amine-based light stabilizer (product name: Tinuvin770, manufactured by BASF); and 1 part by weight of a hindered phenol-based antioxidant (product name: Irganox1010, manufactured by BASF). A resulting mixture was then passed thrice through a three-roll paint mill so as to uniformly disperse the components. Thereafter, the resulting mixture was subjected to dehydration under reduced pressure at 120°C for 2 hours, and then cooled a temperature of not more than 50°C. Next, the following were added to and mixed with the resulting mixture: 4 parts by weight of vinyltrimethoxysilane (product name: A-171, manufactured by Momentive) as a dehydration agent; and 1 part by weight of a silane compound as the component (D) (product name: DYNASYLAN1146, manufactured by Evonik). Thereafter, to the resulting mixture was added 0.2 parts by weight of a dioctyltin dilaurate as the component (E) (product name: NEOSTANN U-810, manufactured by Nitto Kasei Co., Ltd.) as a curing catalyst. The mixture was then kneaded in a state where substantially no moisture was present, to obtain a composition. Thereafter, the obtained composition was sealed in a cartridge that was a moisture-proof container. In this way, a one-component curable composition was obtained.

Comparative Example 1

The following were measured out and then mixed with a spatula: 90 parts by weight of the trimethoxysilyl group-terminated polyoxypropylene polymer (a1) obtained in Synthesis Example 1, as the component (A); 10 parts by weight of the polyoxypropylene polymer (b1) having a per-molecule average of 0.9 dimethoxymethylsilyl groups obtained in Synthesis Example 4, as the component (B); 90 parts by weight of a diisodecyl phthalate plasticizer as the component (C2) (product name: DIDP, manufactured by J-PLUS Co., Ltd.); 170 parts by weight of surface-treated colloidal calcium carbonate (product name: Hakuenka CCR-B, manufactured by Shiraishi Kogyo Kaisha, Ltd.); 64 parts by weight of ground calcium carbonate (product name: Whiton SB, manufactured by Shiraishi Calcium Kaisha, Ltd.); 1 part by weight of a benzotriazole-based ultraviolet absorbent (product name: Tinuvin326, manufactured by BASF); 1 part by weight of a hindered amine-based light stabilizer (product name: Tinuvin770, manufactured by BASF); and 1 part by weight of a hindered phenol-based antioxidant (product name: Irganox1010, manufactured by BASF). A resulting mixture was then passed thrice through a three-roll paint mill so as to uniformly disperse the components. Thereafter, the resulting mixture was subjected to dehydration under reduced pressure at 120°C for 2 hours, and then cooled a temperature of not more than 50°C. Next, the following were added to and mixed with the resulting mixture: 3 parts by weight of vinyltrimethoxysilane (product name: A-171, manufactured by Momentive) as a dehydration agent; and 3 parts by weight of an adhesiveness imparting agent (product name: A-1120, manufactured by Momentive). Thereafter, 0.2 parts by weight of a dioctyltin dilaurate as the component (E) (product name: NEOSTANN U-810, manufactured by Nitto Kasei Co., Ltd.) was added as a curing catalyst. The mixture was then kneaded in a state where substantially no moisture was present, to obtain a composition. Thereafter, the obtained composition was sealed in a cartridge that was a moisture-proof container. In this way, a one-component curable composition was obtained.

Comparative Example 2

The following were measured out and then mixed with a spatula: 100 parts by weight of the dimethoxymethylsilyl group-terminated polyoxypropylene polymer (a3) obtained in Synthesis Example 3; 90 parts by weight of a polyether-based plasticizer as the component (C1) (product name: Actcol P-23, manufactured by Mitsui Chemicals & SKC Polyurethanes Inc., number average molecular weight: 3,000); 15 parts by weight of a diisodecyl phthalate plasticizer as the component (C2) (product name: DIDP, manufactured by J-PLUS Co., Ltd.); 130 parts by weight of surface-treated colloidal calcium carbonate (product name: Viscolite OS, manufactured by Shiraishi Kogyo Kaisha, Ltd.); 64 parts by weight of ground calcium carbonate (product name: Whiton SB, manufactured by Shiraishi Calcium Kaisha, Ltd.); 1 part by weight of a benzotriazole-based ultraviolet absorbent (product name: Tinuvin326, manufactured by BASF); 1 part by weight of a hindered amine-based light stabilizer (product name: Tinuvin770, manufactured by BASF); and 1 part by weight of a hindered phenol-based antioxidant (product name: Irganox1010, manufactured by BASF). A resulting mixture was then passed thrice through a three-roll paint mill so as to uniformly disperse the components. Thereafter, the resulting mixture was subjected to dehydration under reduced pressure at 120°C for 2 hours, and then cooled a temperature of not more than 50°C. Next, the following were added to and mixed with the resulting mixture: 4 parts by weight of vinyltrimethoxysilane (product name: A-171, manufactured by Momentive) as a dehydration agent; and 1 part by weight of a silane compound as the component (D) (product name: DYNASYLAN1146, manufactured by Evonik). Thereafter, to the resulting mixture was added 0.5 parts by weight of dibutyltin diacetyl acetonate as the component (E) (product name: NEOSTANN U-220H, manufactured by Nitto Kasei Co., Ltd.) as a curing catalyst. The mixture was then kneaded in a state where substantially no moisture was present, to obtain a composition. Thereafter, the obtained composition was sealed in a cartridge that was a moisture-proof container. In this way, a one-component curable composition was obtained.

(Example 3)

The following were measured out and then mixed with a spatula: 70 parts by weight of the trimethoxysilyl group-terminated polyoxypropylene polymer (a1) obtained in Synthesis Example 1, as the component (A); 30 parts by weight of the polyoxypropylene polymer (b1) having a per-molecule average of 0.9 dimethoxymethylsilyl groups obtained in Synthesis Example 4, as the component (B); 90 parts by weight of a polyether-based plasticizer as the component (C1) (product name: Actcol P-23, manufactured by Mitsui Chemicals & SKC Polyurethanes Inc., number average molecular weight: 3,000); 15 parts by weight of a diisodecyl phthalate plasticizer as the component (C2) (product name: DIDP, manufactured by J-PLUS Co., Ltd.); 160 parts by weight of surface-treated colloidal calcium carbonate (product name: Hakuenka CCR-B, manufactured by Shiraishi Kogyo Kaisha, Ltd.); 64 parts by weight of ground calcium carbonate (product name: Whiton SB, manufactured by Shiraishi Calcium Kaisha, Ltd.); 10 parts by weight of titanium oxide (product name: Tipaque R-820, manufactured by Ishihara Sangyo Kaisha Ltd.); 2 parts by weight of an anti-sagging agent (product name: Aerosil R972, manufactured by Nippon Aerosil Co., Ltd.); 1 part by weight of a benzotriazole-based ultraviolet absorbent (product name: Tinuvin326, manufactured by BASF); 1 part by weight of a hindered amine-based light stabilizer (product name: Tinuvin770, manufactured by BASF); and 1 part by weight of a hindered phenol-based antioxidant (product name: Irganox1010, manufactured by BASF). A resulting mixture was then passed thrice through a three-roll paint mill so as to uniformly disperse the components. Thereafter, the resulting mixture was subjected to dehydration under reduced pressure at 120°C for 2 hours, and then cooled a temperature of not more than 50°C. Next, the following were added to and mixed with the resulting mixture: 4 parts by weight of vinyltrimethoxysilane (product name: A-171, manufactured by Momentive) as a dehydration agent; and 1 part by weight of a silane compound as the component (D) (product name: DYNASYLAN1146, manufactured by Evonik). Thereafter, to the resulting mixture was added 0.2 parts by weight of a dioctyltin dilaurate as the component (E) (product name: NEOSTANN U-810, manufactured by Nitto Kasei Co., Ltd.) as a curing catalyst. The mixture was then kneaded in a state where substantially no moisture was present, to obtain a composition. Thereafter, the obtained composition was sealed in a cartridge that was a moisture-proof container. In this way, a one-component curable composition was obtained.

(Example 4)

A one-component curable composition was obtained in the same manner as in Example 3, except that, instead of the 70 parts by weight of the polymer (a1) as the component (A) and the 30 parts by weight of the polymer (b1) as the component (B), the following was used: 100 parts by weight of the trimethoxysilyl group-terminated polyoxypropylene polymer (a2) obtained in Synthesis Example 2, as the component (A).

(Example 5)

A one-component curable composition was obtained in the same manner as in Example 3, except that, instead of the 90 parts by weight of the polyether-based plasticizer (Actcol P-23) as the component (C1) and the 15 parts by weight of the diisodecyl phthalate plasticizer (DIDP) as the component (C2), the following was used: 105 parts by weight of the diisodecyl phthalate plasticizer (DIDP) as the component (C2).

(Example 6)

A one-component curable composition was obtained in the same manner as in Example 3, except that, instead of the 0.2 parts by weight of the dioctyltin dilaurate (NEOSTANN U-810) as the component (E), the following was used: 0.1 parts by weight of dibutyltin diacetyl acetonate (product name: NEOSTANN U-220H, manufactured by Nitto Kasei Co., Ltd.) as the component (E).

Comparative Example 3

A one-component curable composition was obtained in the same manner as in Example 3, except that, instead of the 70 parts by weight of the polymer (a1) as the component (A), the following was used: 70 parts by weight of the dimethoxymethylsilyl group-terminated polyoxypropylene polymer (a5) obtained in Synthesis Example 5.

Comparative Example 4

A one-component curable composition was obtained in the same manner as in Example 3, except that (i) instead of the 70 parts by weight of the polymer (a1) as the component (A), the following was used: 70 parts by weight of the polymer (a5), and (ii) instead of the 0.2 parts by weight of the dioctyltin dilaurate (NEOSTANN U-810) as the component (E), the following was used: 0.5 parts by weight of dibutyltin diacetyl acetonate (NEOSTANN U-220H) as the component (E).

Comparative Example 5

A one-component curable composition was obtained in the same manner as in Example 3, except that, instead of the 1 part by weight of the component (D) (DYNASYLAN 1146), the following was used: 2 parts by weight of an aminosilane compound
(N-(2-aminoethyl)-3-aminopropyltrimethoxysilane, product name: A-1120, manufactured by Momentive).

Comparative Example 6

A one-component curable composition was obtained in the same manner as in Example 3, except that, instead of the 0.2 parts by weight of the dioctyltin dilaurate (NEOSTANN U-810) as the component (E), the following was used: 1 part by weight of dioctyltin dilaurate (NEOSTANN U-810) as the component (E).

(Example 7)

A one-component curable composition was obtained in the same manner as in Example 3, except that, instead of the 0.2 parts by weight of the dioctyltin dilaurate (NEOSTANN U-810) as the component (E), the following was used: 0.1 parts by weight of dioctyltin dilaurate (NEOSTANN U-810) as the component (E).

(Example 8)

A one-component curable composition was obtained in the same manner as in Example 3, except that, instead of the 0.2 parts by weight of the dioctyltin dilaurate (NEOSTANN U-810) as the component (E), the following was used: 0.07 parts by weight of dioctyltin dilaurate (NEOSTANN U-810) as the component (E).

(Example 9)

A one-component curable composition was obtained in the same manner as in Example 3, except that, instead of the 0.2 parts by weight of the dioctyltin dilaurate (NEOSTANN U-810) as the component (E), the following was used: 0.05 parts by weight of dioctyltin dilaurate (NEOSTANN U-810) as the component (E).

Comparative Example 7

A one-component curable composition was obtained in the same manner as in Example 3, except that, instead of the 0.2 parts by weight of the dioctyltin dilaurate (NEOSTANN U-810) as the component (E), the following was used: 0.01 parts by weight of dioctyltin dilaurate (NEOSTANN U-810) as the component (E).

Skin Formation Time

Each one-component curable composition obtained as above was filled into a mold form having a thickness of approximately 3 mm, and the surface of the composition was made flat. The surface of the curable composition was touched with a microspatula, and the length of time required for the curable composition to no longer stick to the microspatula was measured, the curing starting time considered as being when the flattening of the surface was finished. The length of time thus measured was considered to be a "skin formation time". The skin formation time measurements were carried out at 23°C (50% RH). The test results are shown in Tables 1 to 4.

Deep Portion Curability

For each one-component curable composition obtained as above, a specimen was produced by (i) filling the composition into a cylindrical polyethylene container having a diameter of 12 mm, with care being taken to avoid air bubbles getting into the curable composition, and (ii) making the surface of the composition flat. The specimen was allowed to stand at 23°C (50% RH) for 1 day, and an identical specimen was allowed to stand at 23°C (50% RH) for 7 days. After the 1-day period of standing, and after the 7-day period of standing, a cured portion of each specimen was taken out, non-cured portions adhering thereto were removed, and the thickness of the cured portion was measure using calipers. Cases where there was no cured portion (cases of failure to cure) were denoted as "Could not be measured". The test results are shown in Tables 1 to 3.

Workability

Each one-component curable composition obtained as above was allowed to stand for 5 hours or more in a thermoregulated bath set to 5°C, so as to stabilize the state of the composition. Thereafter, the curable composition was filled into a 100 ml container, with care being taken to avoid air bubbles getting into the curable composition. Next, a glass rod measuring 8 mm in diameter was promptly inserted into the curable composition, and then pulled out from the curable composition at a tensile speed of 1000 mm/minute, with use of a tensile testing machine having a thermoregulated bath set to 5°C. After the glass rod was pulled out, the length of the curable composition hanging from the tip of the glass rod was measured. The test results are shown in Tables 1 to 3. The "workability" can also be called "stringiness".

Tensile Test

Each one-component curable composition obtained as above was filled into a polyethylene mold form measuring 3 mm in thickness, with care taken to avoid air bubbles getting into the curable composition. The curable composition was then allowed to stand at 23°C (50% RH) for 3 days, and then at 50°C for 4 days. This resulted in a cured product sheet having a thickness of 3 mm. From this sheet, a test piece was cut out to have a Type 3 dumb-bell shape. Using the test piece, a tensile test was carried out at 23°C (50% RH) (tensile speed: 200 mm/min), to measure 50% modulus, 100% modulus, strength at time of break (breaking strength), and elongation at time of break (elongation at break). Cases where no curing occurred (cases of failure to cure) were denoted as "Could not be measured". The test results are shown in Tables 1 to 4.

Compression Recovery Rate

Each one-component curable composition obtained as above was subjected to test procedures 1 to 6 for durability classification 9030, as described in "Table 2 - Durability Test Procedure" of JIS A1439 (2016), 5.12 Durability Test. The measured values were then used for calculations in the formula below.

Specifically, with use of an aluminum plate as an adherend and a commercially available primer (product name: MP-1000, manufactured by Cemedine) as a primer, an H-shaped specimen having a joint width of 12 mm was prepared, and allowed to age at 23°C for 14 days (50% RH) and then at 30°C for 14 days. Next, the H-shaped specimen was immersed for 24 hours in heated water having a temperature of 50°C, and thereafter allowed to stand at 23°C for 24 hours (50% RH). Thereafter, the H-shaped specimen was compressed 30%, and fixed in this compressed state at 90°C for 7 days (168 hours). Thereafter, the H-shaped specimen was released (i.e., released from compression) in an environment at 23°C and allowed to stand for 24 hours at 23°C (50% RH), after which the recovery rate was measured. A larger recovery rate indicates more favorable recoverability. Cases where no curing occurred (cases of failure to cure) were denoted as "Could not be measured". The test results are shown in Tables 1 to 4.

$$\mathrm{Compression\ recovery\ rate\ (\%) = (L2 - L1/L0 - L1) \times 100}$$

Where:

L0 is the thickness, along the direction of compression, of the curable composition prior to heated compression;
L1 is the thickness, along the direction of compression, of the curable composition during heated compression; and
L2 is the thickness, along the direction of compression, of the curable composition after (i) being subjected to test procedures 1 to 6 of JIS A1439 for durability classification 9030 and then (ii) being allowed to stand for one day (24 hours) at 23°C (50% RH).

Durability Test

Each one-component curable composition obtained as above was subjected to testing in conformity with the test for durability classification 9030, as described in "Table 2 - Durability Test Procedure" of JIS A1439 (2016), 5.12 Durability Test, with use of an aluminum plate as an adherend, and a commercially available primer (product name: MP-1000, manufactured by Cemedine) as a primer.

Evaluation in the durability test was carried out by visually observing the state of cracks at the adhesion interface between the adherend and the cured product, after carrying out test procedures 1 to 9 as described in the above JIS standard. The absence of cracks was regarded as "Pass", and the presence of any cracks was regarded as "Fail". The test results are shown in Tables 1 to 4.

[Table 1]

| | | Example 1 | Example 2 | Comparative Example 1 | Comparative Example 2 |
|---|---|---|---|---|---|
| Component (A) | Polymer (a1) Synthesis Example 1 | 70 | | 90 | |
| | Polymer (a2) Synthesis Example 2 | | 100 | | |
| Polyoxyalkylene-based polymer having dimethoxymethylsilyl group | Polymer (a3) Synthesis Example 3 | | | | 100 |
| Component (B) (reactive plasticizer) | Polymer (b1) Synthesis Example 4 | 30 | | 10 | |
| Component (C1) (polyether-based plasticizer) | Actcol P-23 | 90 | 90 | | 90 |
| Component (C2) (phthalate-ester-based plasticizer) | DIDP | 15 | 15 | 90 | 15 |
| Component (D) | DYNASYLAN 1146 | 1 | 1 | | 1 |
| Aminosilane compound | A-1120 | | | 3 | |
| Colloidal calcium carbonate | Hakuenka CCR-B | 130 | 160 | 170 | |
| | Viscolite OS | | | | 130 |
| Ground calcium carbonate | Whiton SB | 64 | 64 | 64 | 64 |
| Benzotriazole-based ultraviolet absorbent | Tinuvin326 | 1 | 1 | 1 | 1 |
| Hindered amine-based light stabilizer | Tinuvin770 | 1 | 1 | 1 | 1 |
| Hindered phenol-based antioxidant | Irganox1010 | 1 | 1 | 1 | 1 |
| Dehydration agent | A-171 | 4 | 4 | 3 | 4 |

(continued)

| | | Example 1 | Example 2 | Comparative Example 1 | Comparative Example 2 |
|---|---|---|---|---|---|
| Component (E) (tetravalent organotin compound) | NEOSTANN U-810 | 0.2 | 0.2 | 0.2 | |
| | NEOSTANN U-220H | | | | 0.5 |
| Skin formation time (23°C, 50% RH) | (hours) | 4.5 | 6.0 | 0.8 | 8 to 24 |
| Deep portion curability (23°C, 50% RH) | After 1 day (mm) | 4.3 | 3.9 | 3.5 | Could not be measured (Uncured) |
| | After 7 days (mm) | 13.2 | 12.4 | 7.7 | - |
| Workability (5°C, stringiness) | (mm) | 27 | 48 | 40 | 14 |
| Tensile Test | 50% Modulus (MPa) | 0.06 | 0.12 | 0.20 | 0.12 |
| Dumb-bell shape (JIS type 3) | 100% Modulus (MPa) | 0.11 | 0.25 | 0.41 | 0.20 |
| Aging: 3 days at 23°C + 4 days at 50°C | Breaking strength (MPa) | 0.68 | 1.10 | 1.23 | 1.50 |
| | Elongation at break (%) | 886 | 860 | 432 | 1042 |
| Durability test (JIS durability classification 9030) Aluminum base material, commercially available primer | Compression recovery rate (%) | 16 | 33 | 10 | -3 |
| | JIS durability classification 9030 | Pass | Pass | Fail | Fail |

Determination for JIS durability classification 9030: Visual confirmation was carried out for cracks at an adhesion interface between adherend and cured product. Specimens in which no cracks were observed were considered as passing.

[Table 2]

| | | Example 3 | Example 4 | Example 5 | Example 6 |
|---|---|---|---|---|---|
| Component (A) | Polymer (a1) Synthesis Example 1 | 70 | | 70 | 70 |
| | Polymer (a2) Synthesis Example 2 | | 100 | | |

(continued)

| | | Example 3 | Example 4 | Example 5 | Example 6 |
|---|---|---|---|---|---|
| Dimethoxymethylsilyl group-terminated polyoxypropylene-based polymer | Polymer (a4) Synthesis Example 5 | | | | |
| Component (B) (reactive plasticizer) | Polymer (b1) Synthesis Example 4 | 30 | | 30 | 30 |
| Component (C1) (polyether-based plasticizer) | Actcol P-23 | 90 | 90 | | 90 |
| Component (C2) (phthalate-ester-based plasticizer) | DIDP | 15 | 15 | 105 | 15 |
| Component (D) | DYNASYLAN 1146 | 1 | 1 | 1 | 1 |
| Aminosilane compound | A-1120 | 0 | 0 | 0 | 0 |
| Colloidal calcium carbonate | Hakuenka CCR-B | 160 | 160 | 160 | 160 |
| Ground calcium carbonate | Whiton SB | 64 | 64 | 64 | 64 |
| Titanium oxide | Tipaque R820 | 10 | 10 | 10 | 10 |
| Anti-sagging agent | Aerosil R972 | 2 | 2 | 2 | 2 |
| Benzotriazole-based ultraviolet absorbent | Tinuvin326 | 1 | 1 | 1 | 1 |
| Hindered amine-based light stabilizer | Tinuvin770 | 1 | 1 | 1 | 1 |
| Hindered phenol-based antioxidant | Irganox1010 | 1 | 1 | 1 | 1 |
| Dehydration agent | A-171 | 4 | 4 | 4 | 4 |
| Component (E) (tetravalent organotin compound) | NEOSTANN U-810 | 0.2 | 0.2 | 0.2 | |
| | NEOSTANN U-220H | | | | 0.1 |
| Skin formation time (23°C, 50% RH) | (hours) | 7.0 | 6.5 | 8.0 | 7.0 |
| Deep portion curability (23°C, 50% RH) | After 1 day (mm) | 3.7 | 4.0 | 2.5 | 3.6 |
| | After 7 days (mm) | 11.1 | 10.8 | 7.6 | 11.8 |
| Workability (5°C, stringiness) | (mm) | 32 | 48 | 34 | 36 |
| Tensile Test | 50% Modulus (MPa) | 0.10 | 0.12 | 0.15 | 0.10 |
| Dumb-bell shape (JIS type 3) | 100% Modulus (MPa) | 0.21 | 0.24 | 0.30 | 0.19 |
| Aging: 3 days at 23°C + 4 days at 50°C | Breaking strength (MPa) | 1.13 | 1.26 | 0.97 | 1.00 |

(continued)

|  |  | Example 3 | Example 4 | Example 5 | Example 6 |
|---|---|---|---|---|---|
|  | Elongation at break (%) | 913 | 887 | 628 | 815 |
| Durability test (JIS durability classification 9030) | Compression recovery rate (%) | 27.7 | 33.5 | 44.5 | 25.2 |
| Aluminum base material, commercially available primer | JIS durability classification 9030 | Pass | Pass | Pass | Pass |

Determination for JIS durability classification 9030: Visual confirmation was carried out for cracks at an adhesion interface between adherend and cured product. Specimens in which no cracks were observed were considered as passing.

[Table 3]

| | | Comparative Example 3 | Comparative Example 4 | Comparative Example 5 | Comparative Example 6 |
|---|---|---|---|---|---|
| Component (A) | Polymer (a1) Synthesis Example 1 | | | 70 | 70 |
| | Polymer (a2) Synthesis Example 2 | | | | |
| Dimethoxymethylsilyl group-terminated polyoxypropylene-based polymer | Polymer (a4) Synthesis Example 5 | 70 | 70 | | |
| Component (B) (reactive plasticizer) | Polymer (b1) Synthesis Example 4 | 30 | 30 | 30 | 30 |
| Component (C1) (polyether-based plasticizer) | Actcol P-23 | 90 | 90 | 90 | 90 |
| Component (C2) (phthalate-ester-based plasticizer) | DIDP | 15 | 15 | 15 | 15 |
| Component (D) | DYNASYLAN1146 | 1 | 1 | | 1 |
| Aminosilane compound | A-1120 | 0 | 0 | 2 | 0 |
| Colloidal calcium carbonate | Hakuenka CCR-B | 160 | 160 | 160 | 160 |
| Ground calcium carbonate | Whiton SB | 64 | 64 | 64 | 64 |
| Titanium oxide | Tipaque R820 | 10 | 10 | 10 | 10 |
| Anti-sagging agent | Aerosil R972 | 2 | 2 | 2 | 2 |
| Benzotriazole-based ultraviolet absorbent | Tinuvin326 | 1 | 1 | 1 | 1 |
| Hindered amine-based light stabilizer | Tinuvin770 | 1 | 1 | 1 | 1 |
| Hindered phenol-based antioxidant | Irganox1010 | 1 | 1 | 1 | 1 |
| Dehydration agent | A-171 | 4 | 4 | 4 | 4 |
| Component (E) (tetravalent organotin compound) | NEOSTANN U-810 | 0.2 | | 0.2 | 1 |
| | NEOSTANN U-220H | | 0.5 | | |
| Skin formation time (23°C, 50% RH) | (hours) | Not less than 96 | 8.0 | 2.2 | 2.0 |

EP 3 753 984 B1

34

(continued)

| | | Comparative Example 3 | Comparative Example 4 | Comparative Example 5 | Comparative Example 6 |
|---|---|---|---|---|---|
| Deep portion curability (23°C, 50% RH) | After 1 day (mm) | Could not be measured (Uncured) | Could not be measured (Uncured) | 4.1 | 4.1 |
| | After 7 days (mm) | | 9.5 | 10.0 | 10.1 |
| Workability (5°C, stringiness) | (mm) | 14 | 17 | 36 | 43 |
| Tensile Test — Dumb-bell shape (JIS type 3), Aging: 3 days at 23°C + 4 days at 50°C | 50% Modulus (MPa) | Could not be measured (Uncured) | 0.06 | 0.11 | 0.11 |
| | 100% Modulus (MPa) | | 0.12 | 0.24 | 0.20 |
| | Breaking strength (MPa) | | 0.63 | 1.02 | 1.41 |
| | Elongation at break (%) | | 858 | 634 | 980 |
| Durability test (JIS durability classification 9030) | Compression recovery rate (%) | Could not be measured (Uncured) | -4.2 | 6.1 | 2.7 |
| | JIS durability classification 9030 | | Pass | Pass | Fail |
| Aluminum base material, commercially available primer | | | | | |

Determination for JIS durability classification 9030: Visual confirmation was carried out for cracks at an adhesion interface between adherend and cured product. Specimens in which no cracks were observed were considered as passing.

[Table 4]

| | | Example 7 | Example 8 | Example 9 | Comparative Example 7 |
|---|---|---|---|---|---|
| Component (A) | Polymer (a1) Synthesis Example 1 | 70 | 70 | 70 | 70 |
| Component (B) (reactive plasticizer) | Polymer (b1) Synthesis Example 4 | 30 | 30 | 30 | 30 |
| Component (C1) (polyether-based plasticizer) | Actcol P-23 | 90 | 90 | 90 | 90 |
| Component (C2) (phthalate-ester-based plasticizer) | DIDP | 15 | 15 | 15 | 15 |
| Component (D) | DYNASYLAN 1146 | 1 | 1 | 1 | 1 |
| Aminosilane compound | A-1120 | 0 | 0 | 0 | 0 |
| Colloidal calcium carbonate | Hakuenka CCR-B | 160 | 160 | 160 | 160 |
| Ground calcium carbonate | Whiton SB | 64 | 64 | 64 | 64 |
| Titanium oxide | Tipaque R820 | 10 | 10 | 10 | 10 |
| Anti-sagging agent | Aerosil R972 | 2 | 2 | 2 | 2 |
| Benzotriazole-based ultraviolet absorbent | Tinuvin326 | 1 | 1 | 1 | 1 |
| Hindered amine-based light stabilizer | Tinuvin770 | 1 | 1 | 1 | 1 |
| Hindered phenol-based antioxidant | Irganox1010 | 1 | 1 | 1 | 1 |
| Dehydration agent | A-171 | 4 | 4 | 4 | 4 |
| Component (E) (tetravalent organotin compound) | NEOSTANN U-810 | 0.1 | 0.07 | 0.05 | 0.01 |
| Skin formation time (23°C, 50% RH) | (hours) | 25 | 49 | 96 | Not less than 96 |
| Tensile Test | | 50% Modulus (MPa) | 0.10 | 0.08 | 0.05 | |
| | Dumb-bell shape (JIS type 3) | 100% Modulus (MPa) | 0.20 | 0.17 | 0.11 | Could not be measured |
| | Aging: 3 days at 23°C + 4 days at 50°C | Breaking strength (MPa) | 0.98 | 0.81 | 0.44 | (Uncured) |

(continued)

|  |  | Example 7 | Example 8 | Example 9 | Comparative Example 7 |
|---|---|---|---|---|---|
|  | Elongation at break (%) | 820 | 703 | 560 |  |
| Durability test (JIS durability classification 9030) | Compression recovery rate (%) | 39 | 39 | 34 | Could not be measured |
| Aluminum base material, commercially available primer | JIS durability classification 9030 | Pass | Pass | Pass | (Uncured) |

Determination for JIS durability classification 9030: Visual confirmation was carried out for cracks at an adhesion interface between adherend and cured product. Specimens in which no cracks were observed were considered as passing.

As can be seen from Tables 1 to 4, it was found that curable compositions (Examples 1 to 9) in accordance with an embodiment of the present invention pass for durability classification 9030 as defined in "Table 4 - Durability" in "4.2 C)" of JIS A5758 (2016). It was also found that the curable compositions in accordance with an embodiment of the present invention have a favorable compression recovery rate.

Industrial Applicability

A curable composition in accordance with an embodiment of the present invention makes it possible to provide a cured product that (i) has an excellent compression recovery rate, excellent ability to conform to displacement, and excellent durability, and (ii) can be used as sealant for a working joint of a building. As such, the curable composition in accordance with an embodiment of the present invention can be suitably used for e.g. a pressure sensitive adhesive, a sealant, an adhesive agent, an impression material, a vibration-proofing material, a damping material, a sound-proofing material, a foamed material, a coating material, and a spray coating material. The curable composition in accordance with an embodiment of the present invention is particularly suitable for use as a one-component curable composition for a working joint.

**Claims**

1. A one-component curable composition for a working joint, comprising:

    (A) a polyoxyalkylene-based polymer having a per-molecule average of 1.2 to 5 reactive silicon groups represented by General Formula (1);
    (D) a silane compound obtained by partial condensation of an aminosilane compound having a reactive silicon group, or a silane compound obtained by partial condensation of an aminosilane compound having a reactive silicon group with an alkoxysilane compound other than an aminosilane; and
    (E) a tetravalent organotin compound in an amount of not less than 0.05 parts by weight but less than 1 part by weight with respect to 100 parts by weight of the component (A),

$$-SiX_3 \qquad (1)$$

    where each X independently represents a hydroxy group or a hydrolyzable group.

2. The one-component curable composition according to claim 1, further comprising:

    (B) a reactive plasticizer that is a polyoxyalkylene-based polymer having a per-molecule average of 0.5 to less than 1.2 reactive silicon groups represented by General Formula (2):

$$-SiR^1_{3-a}X_a \cdots \qquad (2)$$

where: each $R^1$ independently represents an alkyl group having 1 to 20 carbon atoms, an aryl group having 6 to 20 carbon atoms, and an aralkyl group having 7 to 20 carbon atoms; X is the same as in General Formula (1); and "a" represents an integer of 1 to 3.

3. The one-component curable composition according to claim 1 or 2, wherein the component (B) contains (B1) a polyoxyalkylene-based polymer having, per molecule, one reactive silicon group represented by General Formula (2).

4. The one-component curable composition according to any one of claims 1 to 3, wherein the component (B) is obtained by introducing a reactive silicon group represented by General Formula (2) into (B') a polyoxyalkylene-based precursor polymer having only one functional group into which a reactive silicon group can be introduced, which polyoxyalkylene-based precursor polymer is obtained by reacting an initiator having only one hydroxy group per molecule with alkylene oxide.

5. The one-component curable composition according to any one of claims 1 to 4, wherein the component (B) is obtained by introducing a reactive silicon group represented by General Formula (2) into (B") a polyoxyalkylene-based precursor polymer mixture having a functional group into which a reactive silicon group can be introduced, which polyoxyalkylene-based precursor polymer mixture is obtained by reacting an alkylene oxide with a mixture of (i) an initiator having only one hydroxy group per molecule and (ii) an initiator having two or more hydroxy groups per molecule.

6. The one-component curable composition according to any one of claims 1 to 5, wherein the polyoxyalkylene-based polymers of the component (A) and the component (B) are each a polyoxypropylene-based polymer.

7. The one-component curable composition according to any one of claims 1 to 6, further comprising (C1) a polyether-based plasticizer having no reactive silicon group represented by General Formula (1) or General Formula (2).

8. A joint structure obtained by (i) using the one-component curable composition according to any one of claims 1 to 7 to fill a working joint of a building and (ii) curing the one-component curable composition.

9. A wall comprising:
a joint structure obtained by (i) using the one-component curable composition according to any one of claims 1 to 7 to fill a working joint of a building and (ii) curing the one-component curable composition.

10. A construction method comprising the step of:
using the one-component curable composition according to any one of claims 1 to 7 to fill a working joint of a building and curing the one-component curable composition.

**Patentansprüche**

1. Eine härtbare Einkomponenten-Zusammensetzung für eine Arbeitsfuge, umfassend:

(A) ein Polymer auf Polyoxyalkylen-Basis mit einem pro Molekül-Mittel von 1,2 bis 5 reaktiven Siliciumgruppen, dargestellt durch die allgemeine Formel (1);
(D) eine Silanverbindung, erhalten durch partielle Kondensation einer Aminosilanverbindung, die eine reaktive Siliciumgruppe aufweist, oder eine Silanverbindung, erhalten durch partielle Kondensation einer Aminosilanverbindung, die eine reaktive Siliciumgruppe aufweist, mit einer von einem Aminosilan verschiedenen Alkoxysilanverbindung; und
(E) eine vierwertige Organozinnverbindung in einer Menge von nicht weniger als 0,05 Gewichtsteilen, jedoch weniger als 1 Gewichtsteil, bezogen auf 100 Gewichtsteile der Komponente (A),

$$-SiX_3 \qquad (1)$$

wobei jedes X unabhängig eine Hydroxygruppe oder eine hydrolysierbare Gruppe darstellt.

2. Die härtbare Einkomponenten-Zusammensetzung nach Anspruch 1, weiter umfassend:
(B) einen reaktiven Weichmacher, bei dem es sich um ein Polymer auf Polyoxyalkylen-Basis mit einem pro Molekül-Mittel von 0,5 bis weniger als 1,2 reaktiven Siliciumgruppen, dargestellt durch die allgemeine Formel (2), handelt:

$$-SiR^1_{3-a}X_a \qquad (2)$$

wobei: jedes $R^1$ unabhängig eine Alkylgruppe mit 1 bis 20 Kohlenstoffatomen, eine Arylgruppe mit 6 bis 20 Kohlenstoffatomen und eine Aralkylgruppe mit 7 bis 20 Kohlenstoffatomen darstellt; X wie in der allgemeinen Formel (1) ist; und "a" eine ganze Zahl von 1 bis 3 darstellt.

3. Die härtbare Einkomponenten-Zusammensetzung nach Anspruch 1 oder 2, wobei die Komponente (B) (B1) ein Polymer auf Polyoxyalkylen-Basis enthält, das pro Molekül eine reaktive Siliciumgruppe, dargestellt durch die allgemeine Formel (2), aufweist.

4. Die härtbare Einkomponenten-Zusammensetzung nach einem der Ansprüche 1 bis 3, wobei die Komponente (B) erhalten wird durch Einbringen einer reaktiven Siliciumgruppe, dargestellt durch die allgemeine Formel (2), in (B') ein Vorläuferpolymer auf Polyoxyalkylen-Basis, das nur eine funktionelle Gruppe aufweist, in die eine reaktive Siliciumgruppe eingebracht werden kann, wobei das Vorläuferpolymer auf Polyoxyalkylen-Basis erhalten wird durch Umsetzen eines Initiators, der nur eine Hydroxygruppe pro Molekül aufweist, mit Alkylenoxid.

5. Die härtbare Einkomponenten-Zusammensetzung nach einem der Ansprüche 1 bis 4, wobei die Komponente (B) erhältlich ist durch Einbringen einer reaktiven Siliciumgruppe, dargestellt durch die allgemeine Formel (2), in (B") ein Vorläuferpolymergemisch auf Polyoxyalkylen-Basis, das eine funktionelle Gruppe aufweist, in die eine reaktive Siliciumgruppe eingebracht werden kann, wobei das Vorläuferpolymergemisch auf Polyoxyalkylen-Basis erhalten wird durch Umsetzen eines Alkylenoxids mit einem Gemisch von (i) einem Initiator, der nur eine Hydroxygruppe pro Molekül aufweist, und (ii) einem Initiator, der zwei oder mehr Hydroxygruppen pro Molekül aufweist.

6. Die härtbare Einkomponenten-Zusammensetzung nach einem der Ansprüche 1 bis 5, wobei die Polymere auf Polyoxyalkylen-Basis der Komponente (A) und der Komponente (B) jeweils ein Polymer auf Polyoxypropylen-Basis sind.

7. Die härtbare Einkomponenten-Zusammensetzung nach einem der Ansprüche 1 bis 6, weiter umfassend (C1) einen Weichmacher auf Polyether-Basis, der keine reaktive Siliciumgruppe, dargestellt durch die allgemeine Formel (1) oder die allgemeine Formel (2), aufweist.

8. Eine Fugenstruktur, erhalten durch (i) Verwendung der härtbaren Einkomponenten-Zusammensetzung nach einem der Ansprüche 1 bis 7, um eine Arbeitsfuge eines Gebäudes zu füllen, und (ii) Härten der härtbaren Einkomponenten-Zusammensetzung.

9. Eine Wand, umfassend:
eine Fugenstruktur, erhalten durch (i) Verwendung der härtbaren Einkomponenten-Zusammensetzung nach einem der Ansprüche 1 bis 7, um eine Arbeitsfuge eines Gebäudes zu füllen, und (ii) Härten der härtbaren Einkomponenten-Zusammensetzung.

10. Ein Bauverfahren, umfassend die Schritte:
Verwendung der härtbaren Einkomponenten-Zusammensetzung nach einem der Ansprüche 1 bis 7, um eine Arbeitsfuge eines Gebäudes zu füllen, und Härten der härtbaren Einkomponenten-Zusammensetzung.

**Revendications**

1. Composition durcissable à un seul composant pour un joint de travail, comprenant :

(A) un polymère à base de polyoxyalkylène ayant une moyenne par molécule de 1,2 à 5 groupes silicones réactifs représentés par la formule générale (1) ;
(D) un composé silane obtenu par condensation partielle d'un composé aminosilane ayant un groupe silicone réactif, ou un composé silane obtenu par condensation partielle d'un composé aminosilane ayant un groupe silicone réactif avec un composé alcoxysilane autre qu'un aminosilane ; et
(E) un composé de l'étain organique tétravalent en une quantité non inférieure à 0,05 partie en poids mais inférieure à 1 partie en poids pour 100 parties en poids du composant (A),

$$-SiX_3 \qquad (1)$$

où chaque X représente indépendamment un groupe hydroxy ou un groupe hydrolysable.

2. Composition durcissable à un seul composant selon la revendication 1, comprenant en outre :
(B) un plastifiant réactif qui est un polymère à base de polyoxyalkylène ayant une moyenne par molécule de 0,5 à moins de 1,2 groupes silicones réactifs représentés par la formule générale (2) :

$$-SiR^1_{3-a}X_a \qquad (2)$$

où : chaque $R^1$ représente indépendamment un groupe alkyle ayant 1 à 20 atomes de carbone, un groupe aryle ayant 6 à 20 atomes de carbone, et un groupe aralkyle ayant 7 à 20 atomes de carbone ; X est tel que dans la formule générale (1) ; et "a" représente un entier de 1 à 3.

3. Composition durcissable à un seul composant selon la revendication 1 ou 2, dans laquelle le composant (B) contient (B1) un polymère à base de polyoxyalkylène ayant, par molécule, un groupe silicone réactif représenté par la formule générale (2).

4. Composition durcissable à un seul composant selon l'une quelconque des revendications 1 à 3, dans laquelle le composant (B) est obtenu par introduction d'un groupe silicone réactif représenté par la formule générale (2) dans (B') un polymère précurseur à base de polyoxyalkylène ayant un seul groupe fonctionnel dans lequel un groupe silicone réactif peut être introduit, lequel polymère précurseur à base de polyoxyalkylène est obtenu par réaction d'un amorceur ayant un seul groupe hydroxy par molécule avec de l'oxyde d'alkylène.

5. Composition durcissable à un seul composant selon l'une quelconque des revendications 1 à 4, dans laquelle le composant (B) est obtenu par introduction d'un groupe silicone réactif représenté par la formule générale (2) dans (B") un mélange de polymère précurseur à base de polyoxyalkylène ayant un groupe fonctionnel dans lequel un groupe silicone réactif peut être introduit, lequel mélange de polymère précurseur à base de polyoxyalkylène est obtenu par réaction d'un oxyde d'alkylène avec un mélange de (i) un amorceur ayant un seul groupe hydroxy par molécule et (ii) un amorceur ayant deux ou plus de deux groupes hydroxy par molécule.

6. Composition durcissable à un seul composant selon l'une quelconque des revendications 1 à 5, dans laquelle les polymères à base de polyoxyalkylène du composant (A) et du composant (B) sont chacun un polymère à base de polyoxypropylène.

7. Composition durcissable à un seul composant selon l'une quelconque des revendications 1 à 6, comprenant en outre (C1) un plastifiant à base de polyéther n'ayant pas de groupe silicone réactif représenté par la formule générale (1) ou la formule générale (2).

8. Structure de joint obtenue par (i) utilisation de la composition durcissable à un seul composant selon l'une quelconque des revendications 1 à 7 pour remplir un joint de travail d'une construction et (ii) durcissement de la composition durcissable à un seul composant.

9. Mur comprenant :
une structure de joint obtenue par (i) utilisation de la composition durcissable à un seul composant selon l'une quelconque des revendications 1 à 7 pour remplir un joint de travail d'une construction et (ii) durcissement de la composition durcissable à un seul composant.

10. Méthode de construction comprenant l'étape de :
utilisation de la composition durcissable à un seul composant selon l'une quelconque des revendications 1 à 7 pour remplir un joint de travail d'une construction et durcissement de la composition durcissable à un seul composant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009306283 A1
- WO 2005073322 A
- JP 2015508419 W
- JP 2015089911 A
- WO 2014175358 A
- WO 2004031299 A
- JP 2010001380 A
- JP 2011256246 A
- JP 2005306891 A
- JP 2011153309 A
- WO 2013042702 A
- JP 2015010162 A
- JP 2017214541 A
- WO 2007040143 A
- JP 2008285585 A
- JP 3047825 A
- JP 61215623 A
- JP 46027250 B
- JP 59015336 B
- US 3278457 A
- US 3278458 A
- US 3278459 A
- US 3427256 A
- US 3427334 A
- US 3427335 A
- JP 10273512 A
- JP 11060722 A
- JP 4536319 B
- JP 46012154 B
- JP 50156599 A
- JP 54006096 A
- JP 55013767 A
- JP 55013468 A
- JP 57164123 A
- JP 3002450 B
- US 3632557 A
- US 4345053 A
- US 4366307 A
- US 4960844 A
- JP 61197631 A
- JP 61215622 A
- JP 61218632 A
- JP 3072527 A
- JP 8231707 A
- JP 6211879 A
- US 5364955 A
- JP 10053637 A
- US 5756751 A
- JP 10204144 A

- EP 0831108 A
- JP 2000169544 A
- JP 2000169545 A
- JP 58109529 A
- US 4374237 A
- JP 62013430 A
- US 4645816 A
- JP 8053528 A
- EP 0676403 A
- JP 2003508561 W
- US 6197912 B
- JP 11100427 A
- JP 2002212415 A
- JP 3313360 B
- US 4067844 A
- US 3711445 A
- JP 2001323040 A
- JP 2000119365 A
- US 6046270 A
- JP 11279249 A
- US 5990257 A
- JP 58029818 A
- US 5068304 A
- JP 11060724 A
- JP 2002155145 A
- JP 2002249538 A
- WO 03018658 A
- WO 03059981 A
- JP 2001207157 A
- JP 2000154368 A
- JP 2001164237 A
- JP 2129262 A
- JP 4008788 A
- JP 4173867 A
- JP 5001225 A
- JP 7113073 A
- JP 9053063 A
- JP 10251618 A
- WO 9705201 A
- JP 2001115142 A
- JP 4283259 A
- JP 9194731 A
- JP 11349916 A
- JP 2003155389 A
- JP 5117521 A
- JP 11241029 A
- JP 7258534 A
- JP 6279693 A

**Non-patent literature cited in the description**

- Kankosei Jushi [Photosensitive Resins. Insatsu Gakkai Shuppanbu Ltd, 17 March 1972, 93-106, 117